# EUROPEAN PATENT SPECIFICATION

(11) **EP 1 636 245 B1**
(45) Date of publication and mention of the grant of the patent: **25.02.2009**
(21) Application number: 04734999.8
(22) Date of filing: 27.05.2004
(51) Int. Cl.: C07F 17/00

(54) **BISINDENYL ZIRCONIUM COMPLEXES FOR USE IN THE POLYMERISATION OF OLEFINS**
BISINDENYL-ZIRCONIUM-KOMPLEXE ZUR OLEFINPOLYMERISATION
COMPLEXES DE ZIRCONIUM DE BISINDENYLE UTILISABLES POUR LA POLYMERISATION D'OLEFINES

(30) Priority: 28.05.2003 DE 10324541; 14.07.2003 US 486937 P; 03.09.2003 DE 10341026
(43) Date of publication of application: 22.03.2006
(73) Proprietor: Basell Polyolefine GmbH, 50389 Wesseling (DE)
(72) Inventor: OKUMURA, Yoshikuni, 67069 Ludwigshafen (DE); SEIDEL, Naka, 60433 Frankfurt (DE); KÖLLING, Lars, 68165 Mannheim (DE)
(86) International application number: PCT/EP2004/005688
(87) International publication number: WO 2004/106351

(56) References cited:
- EP-A- 0 776 913
- EP-A- 0 834 519
- WO-A-01/48034

## Description

The present invention relates to organometallic transition metal compounds of the formula (I) 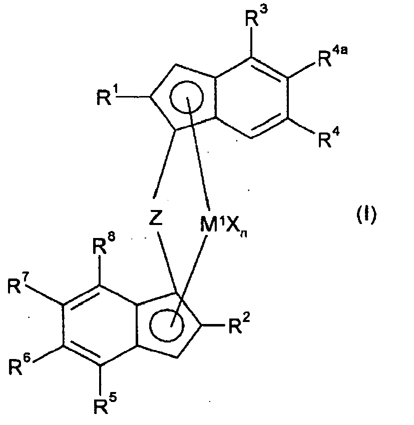 where
- M¹: is an element of group 4 of the Periodic Table of the Elements,
- X: are identical or different and are each halogen, hydrogen, C₁-C₂₀-alkyl, C₂-C₂₀-alkenyl, C₆-C₂₂-aryl, an alkylaryl or arylalkyl group having from 1 to 10 carbon atoms in the alkyl part and from 6 to 22 carbon atoms in the aryl part, -OR⁹ or -NR⁹R¹⁰, with two radicals X also being able to be joined to one another, wherein the radicals R⁹ and R¹⁰ are each C₁-C₁₀-alkyl, C₆-C₁₅-aryl, alkylaryl, arylalkyl, fluoroalkyl or fluoroaryl each having from 1 to 20 carbon atoms in the alkyl radical and 6 to 22 carbon atoms in the aryl radical,
- n: is 2,
- R¹: is hydrogen, a C₁-C₈ n-alkyl radical,
- R²: is a C₃-C₄₀ alkyl or -cycloalkyl radical which is branched in the α position,
- R³: is phenyl, 2-tolyl, 3-tolyl, 4-tolyl, 2,3-dimethylphenyl, 2,4-dimethylphenyl, 2,5-dimethylphenyl, 2,6-dimethylphenyl, 3,4-dimethylphenyl, 3,5-dimethylphenyl, 3,5-di( tert-butyl)phenyl, 2,4,6-trimethylphenyl, 2,3,4-trimethylphenyl, 1-naphthyl, 2-naphthyl, phenanthrenyl, p-isopropylphenyl, p-tert-butylphenyl, p-s-butylphenyl, p-cyclohexylphenyl and p-trimethylsilylphenyl,
- R⁴: is methyl or ethyl,
- R^{4a}: is hydrogen or C₁-C₁₀-n-alkyl,
- R⁵: is phenyl, 2-tolyl, 3-tolyl, 4-tolyl, 2,3-dimethylphenyl, 2,4-dimethylphenyl, 2,5-dimethylphenyl, 2,6-dimethylphenyl, 3,4-dimethylphenyl, 3,5-dimethylphenyl, 3,5-di(tert-butyl)phenyl, 2,4,6-trimethylphenyl, 2,3,4-trimethylphenyl, 1-naphthyl, 2-naphthyl, phenanthrenyl, p-isopropylphenyl, p-tert-butylphenyl, p-s-butylphenyl, p-cyclohexylphenyl and p-trimethylsilylphenyl,
- R⁶,: R⁷, R⁸ are each hydrogen,
- Z: is 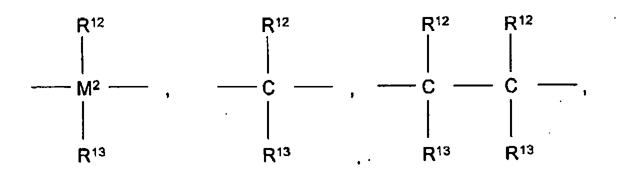 where
M² is silicon and
R¹², R¹³ are identical or different and are each a hydrogen atom, a halogen atom, a trimethylsilyl group, a C₁-C₁₀-,alkyl group, a C₁-C₁₀-fluoroalkyl group, a C₆-C₁₀-fluoroaryl group, a C₆-C₁₀-aryl group, a C₁-C₁₀-alkoxy group, a C₇-C₁₅-alkylaryloxy group, a C₂-C₁₀-alkenyl group, a C₇-C₄₀-arylalkyl group, a C₈-C₄₀-arylalkenyl group or a C₇-C₄₀-alkylaryl group or two adjacent radicals together with the atoms connecting them form a saturated or unsaturated ring having from 4 to 15 carbon atoms,

In addition, the present invention relates to biscyclopentadienyl ligand systems having such.a substitution pattern, catalyst systems comprising at least one of the organometallic transition metal compounds of the invention, a process for preparing polyolefins by polymerization or copolymerization of at least one olefin in the presence of one of the catalyst systems of the present invention and the use of the biscyclopentadienyl ligand systems of the invention for preparing organometallic transition metal compounds.

Research and development directed at the use of organometallic transition metal compounds, in particular metallocenes, as catalyst components for the polymerization and copolymerization of olefins with the aim of preparing tailored polyolefins has been pursued intensively in universities and in industry in the past 15 years. Ethylene-based polyolefins prepared by means of metallocene catalyst systems and also, in particular, propylene-based polyolefins prepared by means of metallocene catalyst systems are now a dynamically growing market segment.

In the preparation of propylene-ethylene copolymers which are used, for example, as rubber phase in the preparation of impact-modified propylene polymers, there has usually been the problem that the molar masses of the propylene-ethylene copolymer which can be achieved using the known metallocene catalysts are significantly reduced compared to the molar masses of isotactic propylene homopolymer.

EP 0 776 913 A2 describes the preparation of high molecular weight propylene-ethylene copolymers using specifically substituted C2-symmetric bisindenyl metallocenes.

EP0 834 519 A1 describes catalyst systems comprising C1-symmetric bisindenyl metallocenes which are suitable for the homopolymerization of propylene and produce propylene homopolymers having high melting points.

WO 01/48034 A2 describes catalyst systems which, as a result of specifically substituted metallocenes, are able to produce both propylene-ethylene copolymers as rubber phase having a satisfactory molar mass and also propylene homopolymers having a sufficiently high melting point for satisfactory stiffness of the matrix.

However, the known metallocene catalyst systems still leave something to be desired in terms of the combination of high molar mass of the rubber phase and stiffness of the matrix. A further aspect is the economical accessibility of the catalyst components.

It is an object of the present invention to find organometallic transition metal compounds which as catalyst constituents are able to achieve a further increase in the molar mass of the propylene-ethylene copolymer resulting from the polymerization compared to the known metallocenes and at the same time maintain the desired stiffness of the propylene homopolymer. Furthermore, the organometallic transition metal compounds should be able to be obtained in a very economical fashion.

We have found that this object is achieved by the organometallic transition metal compounds of the formula (I) described at the outset.

M¹ is an element of group 4 of the Periodic Table of the Elements , for example titanium, zirconium, hafnium, vanadium, preferably zirconium and hafnium and particularly preferably zirconium.

The radicals X are identical or different, preferably identical, and are each halogen, for example fluorine, chlorine, bromine, iodine, preferably chlorine, hydrogen, C₁-C₂₀-, preferably C₁-C₄-alkyl, C₂-C₂₀-, preferably C₂-C₄-alkenyl, C₆-C₂₂-, preferably C₆-C₁₀-aryl, an alkylaryl or arylalkyl group having from 1 to 10, preferably from 1 to 4, carbon atoms in the alkyl part and from 6 to 22, preferably from 6 to 10, carbon atoms in the aryl part, -OR⁹ or -NR⁹R¹⁰, preferably -OR⁹, with two radicals X also being able to be joined to one another, preferably two -OR⁹ radicals. The radicals R⁹ and R¹⁰ are each C₁-C₁₀-, preferably C₁-C₄-alkyl, C₆-C₁₆-, preferably C₆-C₁₀-aryl, alkylaryl, arylalkyl, fluoroalkyl or fluoroaryl each having from 1 to 20, preferably from 1 to 4, carbon atoms in the alkyl radical and 6 to 22, preferably from 6 to 10, carbon atoms in the aryl radical.

Unless restricted further, alkyl is a linear, branched or cyclic radical such as methyl, ethyl, n-propyl, isopropyl, n-butyl, i-butyl, s-butyl, t-butyl, n-pentyl, cyclopentyl, n-hexyl, cyclohexyl, n-heptyl or n-octyl.

The index n is 2.

The radical R¹ is a C₁-C₈ -n-alkyl radical
Examples of especially preferred radicals R¹ are methyl, ethyl, n-propyl or n-hexyl.

The radical R² is a C₃-C₁₀ alkyl or -cycloalkyl radical which is branched in the α position. The expression "radical branched in the α position" refers to a radical whose linking α atom bears at least two atoms other than hydrogen and not more than one directly bound hydrogen atom. The linking α atom is carbon.

Examples of preferred radicals R² are isopropyl, 1-methylpropyl, 1-methylbutyl, 1-ethylbutyl, 1-methylpentyl and cyclohexyl, in particular isopropyl and cyclohexyl.

T The radical R³ is selected from phenyl, 2-tolyl, 3-tolyl, 4-tolyl, 2,3-dimethylphenyl, 2,4-dimethylphenyl, 2,5-dimethylphenyl, 2,6-dimethylphenyl, 3,4-dimethylphenyl, 3,5-dimethylphenyl, 3,5-di( tert-butyl)phenyl, 2,4,6-trimethylphenyl, 2,3,4-trimethylphenyl, 1-naphthyl, 2-naphthyl, phenanthrenyl, p-isopropylphenyl, p-tert-butylphenyl, p-s-butylphenyl, p-cyclohexylphenyl and p-trimethylsilylphenyl, in particular phenyl, 1-naphthyl, 3,5-dimethylphenyl and p-tert-butylphenyl.

The radical R⁴ is methyl or ethyl, preferably methyl.
The radical R^{4a} is hydrogen or a C₁-C₁₀-n-alkyl radical such as methyl, ethyl, n-propyl, n-butyl, n-hexyl or n-octyl. R^{4a} is preferably hydrogen, methyl or ethyl, in particular hydrogen.

The radicals R⁶, R⁷ and R⁸ are each hydrogen The radical R⁵ is selected from phenyl, 2-tolyl, 3-tolyl, 4-tolyl, 2,3-dimethylphenyl, 2,4-dimethylphenyl, 2,5-dimethylphenyl, 2,6-dimethylphenyl, 3,4-dimethylphenyl, 3,5-dimethylphenyl, 3,5-di(tert-butyl)phenyl, 2,4,6-trimethylphenyl, 2,3,4-trimethylphenyl, 1-naphthyl, 2-naphthyl, phenanthrenyl, p-isopropylphenyl, p-tert-butylphenyl, p-s-butylphenyl, p-cyclohexylphenyl and p-trimethylsilylphenyl, in particular phenyl, 1-naphthyl, 3,5-dimethylphenyl and p-tert-butylphenyl.

Since particularly the interplay of the steric effects of the radicals R¹, R², R³, R⁴, R^{4a} , R⁵, R⁶, R⁷ and R⁸, in particular the radicals R¹, R², R³, R⁴ and R⁵, determines the polymerization properties of the organometallic transition metal compounds of the present invention, functional groups on the radicals described usually have no critical influence on the fundamental polymerization behavior of the organometallic transition metal compounds, as long as these functional groups are chemically inert under the polymerization conditions.

Z is a bridge consisting of a divalent atom or a divalent group. Z is: 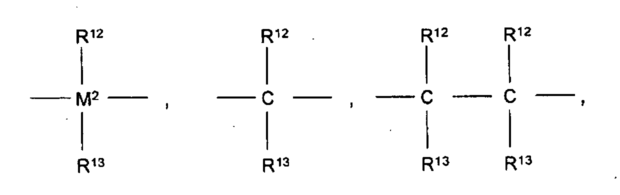 where
M² is silicon, and
R¹² , R¹³ and R¹⁴ are identical or different and are each a hydrogen atom, a halogen atom, a trimethylsilyl group, a C₁-C₁₀-, preferably C₁-C₃-alkyl group, a C₁-C₁₀-fluoroalkyl group, a C₆-C₁₀-fluoroaryl group, a C₆-C₁₀-aryl group, a C₁-C₁₀-, preferably C₁-C₃-alkoxy group, a C₇-C₁₅-alkylaryloxy group, a C₂-C₁₀-, preferably C₂-C₄-alkenyl group, a C₇-C₄₀-arylalkyl group, a C₈-C₄₀-arylalkenyl group or a C₇-C₄₀-alkylaryl group or two adjacent radicals together with the atoms connecting them form a saturated or unsaturated ring having from 4 to 15 carbon atoms.

Particularly preferred embodiments of Z are the bridges:
dimethylsilanediyl, methylphenylsilanediyl, diphenylsilanediyl, dimethylgermanediyl, ethylidene, 1-methylethylidene, 1,1-dimethylethylidene, 1,2-dimethylethylidene, 1,1,2,2-tetramethylethylidene, dimethylmethylidene, phenylmethylmethylidene or diphenylmethylidene, in particular dimethylsilanediyl, diphenylsilanediyl and ethylidene. 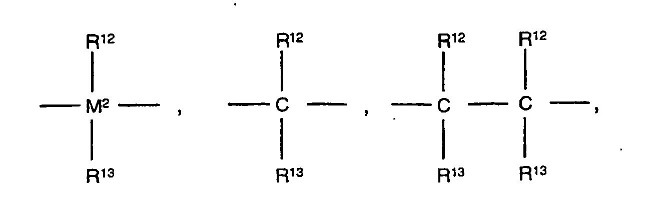
where
M² is silicon, germanium or tin, preferably silicon or germanium, particularly preferably silicon, and

R¹² , R¹³ and R¹⁴ are identical or different and are each a hydrogen atom, a halogen atom, a trimethylsilyl group, a C₁-C₁₀-, preferably C₁-C₃-alkyl group, a C₁-C₁₀-fluoroalkyl group, a C₆-C₁₀-fluoroaryl group, a C₆-C₁₀-aryl group, a C₁-C₁₀-, preferably C₁-C₃-alkoxy group, a C₇-C₁₅-alkylaryloxy group, a C₂-C₁₀- , preferably C₂-C₄-alkenyl group, a C₇-C₄₀-arylalkyl group, a C₈-C₄₀-arylalkenyl group or a C₇-C₄₀-alkylaryl group or two adjacent radicals together with the atoms connecting them form a saturated or unsaturated ring having from 4 to 15 carbon atoms.

Particularly preferred embodiments of Z are the bridges:
dimethylsilanediyl, methylphenylsilanediyl, diphenylsilanediyl, dimethylgermanediyl, ethylidene, 1-methylethylidene, 1,1-dimethylethylidene, 1,2-dimethylethylidene, 1,1,2,2-tetramethylethylidene, dimethylmethylidene, phenylmethylmethylidene or diphenylmethylidene, in particular dimethylsilanediyl, diphenylsilanediyl and ethylidene.

Preference is given to organometallic transition metal compounds of the formula (I) in which
- M¹: is an element of group 4 of the Periodic Table of the Elements, preferably zirconium or hafnium, particularly preferably zirconium,
- n: is 2,
- R¹: is a C₁-C₈-n-alkyl radical or a substituted or unsubstituted furyl or thienyl radical, for example methyl, ethyl, n-propyl, n-butyl, n-hexyl, n-octyl, 2-(5-methyl)thienyl, 2-(5-methyl)furyl or furyl, preferably methyl, ethyl or n-propyl, in particular methyl or ethyl,
- R²: is a C₃-C₁₀-, in particular C₃-C₆-alkyl or -cycloalkyl radical which is branched in the α position, for example isopropyl, cyclobutyl, 1-methylpropyl, 1-methylbutyl, 1-ethylbutyl, 1-methylpentyl, cyclopentyl or cyclohexyl, preferably isopropyl or cyclohexyl,

Examples of novel organometallic transition metal compounds of the formula (I), which do not, however, restrict the invention, are:
dimethylsilanediyl(2,6-dimethyl-4-(p-t-butylphenyl)indenyl)(2-isopropyl-4-(4-t-butylphenyl)-indenyl)zirconium dichloride,
dimethylsilanediyl(2-ethyl-6-methyl-4-(p-t-butylphenyl)indenyl)(2-isopropyl-4-(4-t-butylphenyl)-indenyl)zirconium dichloride,
dimethylsilanediyl(2,6-dimethyl-4-(p-t-butylphenyl)indenyl)(2-sec-butyl-4-(4-t-butylphenyl)-indenyl)zirconium dichloride,
dimethylsilanediyl(2,6-dimethyl-4-(p-t-butylphenyl)indenyl)(2-(1-methylpentyl)-4-(4-t-butylphenyl)-indenyl)zirconium dichloride,
dimethylsilanediyl(2,6-dimethyl-4-(p-t-butylphenyl)indenyl)(2-(1-methylbutyl)-4-(4-t-butylphenyl)-indenyl)zirconium dichloride,
dimethylsilanediyl(2,6-dimethyl-4-(p-t-butylphenyl)indenyl)(2-cyclopentyl-4-(4-t-butylphenyl)-indenyl)zirconium dichloride,
dimethylsilanediyl(2,6-dimethyl-4-(p-t-butylphenyl)indenyl)(2-cyclohexyl-4-(4-t-butylphenyl)-indenyl)zirconium dichloride,
dimethylsilanediyl(2,6-dimethyl-4-phenylindenyl)(2-isopropyl-4-(4-t-butylphenyl)indenyl)-zirconium dichloride,
dimethylsilanediyl(2,6-dimethyl-4-(2-methylphenyl)indenyl)(2-isopropyl-4-(4-t-butylphenyl)indenyl)-zirconium dichloride,
dimethylsilanediyl(2,6-dimethyl-4-(2,5-dimethylphenyl)indenyl)(2-isopropyl-4-(4-t-butylphenyl) indenyl)- zirconium dichloride,
dimethylsilanediyl(2,6-dimethyl-4-(2-methylphenyl)indenyl)(2-isopropyl-4-phenylindenyl)-zirconium dichloride,
dimethylsilanediyl(2,6-dimethyl-4-(2,5-dimethylphenyl)indenyl)(2-isopropyl-4-phenylindenyl)-zirconium dichloride,
dimethylsilanediyl(2,6-dimethyl-4-phenylindenyl)(2-isopropyl-4-(2-methylphenyl)indenyl)-zirconium dichloride,
dimethylsilanediyl(2,6-dimethyl-4-phenylindenyl)(2-isopropyl-4-(2,5-dimethylphenyl)indenyl)-zirconium dichloride,
dimethylsilanediyl(2,6-dimethyl-4-(4-t-butylphenyl)indenyl)(2-isopropyl-4-(2-methylphenyl)indenyl)-zirconium dichloride,
dimethylsilanediyl(2,6-dimethyl-4-(4-t-butylphenyl)indenyl)(2-isopropyl-4-(2,5-dimethylphenyl)indenyl)-zirconium dichloride,
dimethylsilanediyl(2-methyl-6-ethyl-4-(p-t-butylphenyl)indenyl)(2-isopropyl-4-(4-t-butylphenyl)-indenyl)zirconium dichloride,
dimethylsilanediyl(2-methyl-6-ethyl-4-phenyl-indenyl)(2-isopropyl-4-(4-t-butylphenyl)indenyl)-zirconium dichloride,
dimethylsilanediyl(2,5,6-trimethyl-4-(p-t-butylphenyl)indenyl)(2-isopropyl-4-(4-t-butylphenyl)-indenyl)zirconium dichloride,
dimethylsilanediyl(2,5,6-trimethyl-4-(p-t-butylphenyl)indenyl)(2-isopropylindenyl)zirconium dichloride,
dimethylsilanediyl(2,5,6-trimethyl-4-phenylindenyl)(2-isopropyl-4-(4-t-butylphenyl)indenyl)-zirconium dichloride,
dimethylsilanediyl(2,5,6-trimethyl-4-(p-t-butylphenyl)indenyl)(2-isopropyl-4-phenylindenyl)-zirconium dichloride,
dimethylsilanediyl(2,5-dimethyl-6-ethyl-4-(p-t-butylphenyl)indenyl)(2-isopropyl-4-(4-t-butylphenyl)-indenyl)zirconium dichloride.

Compared to the previously known metallocenes, the novel organometallic transition metal compounds of the formula (I) achieve an increase in the molar masses which have previously been achieved in the copolymerization of propylene with ethylene and at the same time give an isotactic polypropylene having a satisfactory molar mass and high melting point in the homopolymerization of propylene.

The novel metallocenes of the formula (I) can be prepared by methods as described in WO 01/48034 A2. The organometallic transition metal compounds of the formula (I) are usually obtained together with a further diastereomer.

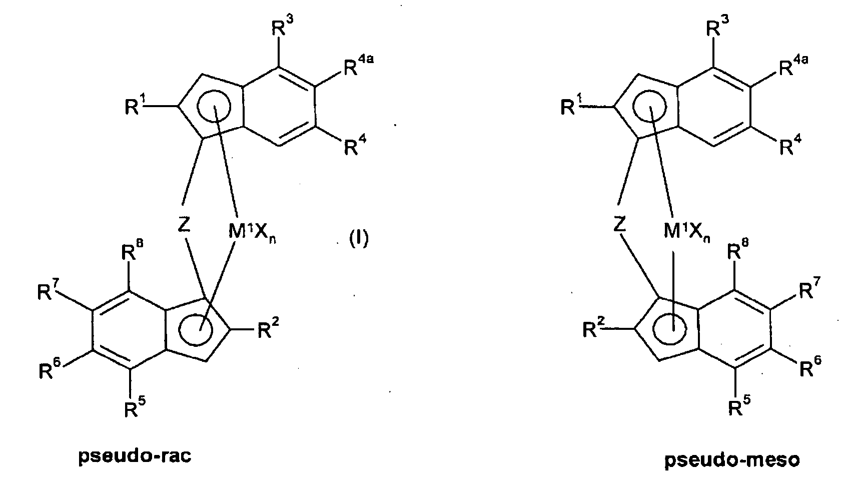

In the preparation of a catalyst, the organometallic transition metal compounds of the formula (I) (pseudo-rac) can, if appropriate, be used as a mixture with the undesirable diastereomers (pseudo-meso) which are also produced in their synthesis. The organometallic transition metal compounds of the formula (I) give highly isotactic polypropylene, while the corresponding undesirable diastereomers generally give atactic polypropylene.

The invention further provides biscyclopentadienyl ligand systems of the formula (II) 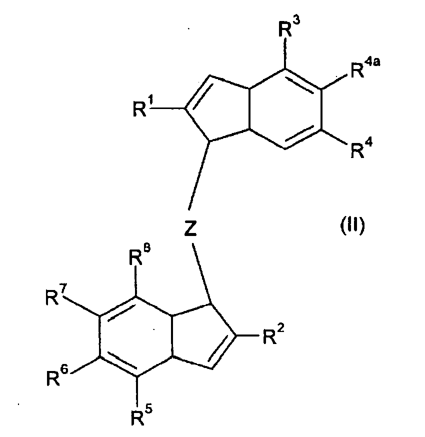 or their double bond isomers,
where the variables R¹, R², R³, R⁴, R^{4a}, R⁵, R⁶,R⁷, R⁸ and Z are as defined for formula (I).

The substitution pattern of the biscyclopentadienyl ligand systems of the formula (II) is the determining factor in the particular polymerization properties of the organometallic transition metal compounds in which these biscyclopentadienyl ligand systems are present.

The invention further provides for the use of a biscyclopentadienyl ligand system of the formula (II) for preparing an organometallic transition metal compound, preferably for preparing an organometallic transition metal compound containing an element of group 4 of the Periodic Table of the Elements, in particular zirconium.

Thus, a process for preparing an organometallic transition metal compound which comprises reacting a biscyclopentadienyl ligand system of the formula (II) or a bisanion produced therefrom with a transition metal compound is also subject matter of the present invention. The usual procedure is firstly to doubly deprotonate a ligand system of the formula (II) by means of a base such as n-butyllithium and subsequently react the bisanion with a suitable transition metal source such as zirconium tetrachloride. However, as an alternative, the uncharged biscyclopentadienyl ligand system of the formula (II) can also be reacted directly with a suitable transition metal source comprising strongly basic ligands, for example tetrakis(dimethylamino)zirconium.

Particularly in the presence of suitable cocatalysts, the novel organometallic transition metal compounds of the formula (I) represent a highly active catalyst constituent for the polymerization of olefins.

Accordingly, the present invention also provides a catalyst system comprising at least one organometallic transition metal compound of the formula (I) and at least one cocatalyst.

The cocatalyst reacts with the novel organometallic transition metal compound of the formula (I) to form a polymerization-active catalyst system, with the cocatalyst serving as cation-forming compound.

Suitable cation-forming compounds which are able to react with an organometallic transition metal compound according to the present invention to convert it into a cationic compound are, for example, compounds such as an aluminoxane, a strong uncharged Lewis acid, an ionic compound having a Lewis-acid cation or an ionic compound containing a Brönsted acid as cation. In the case of metallocene complexes as organometallic transition metal compounds, the cation-forming compounds are frequently also referred to as compounds capable of forming metallocenium ions.

As aluminoxanes, it is possible to use, for example, the compounds described in WO 00/31090. Particularly useful aluminoxanes are open-chain or cyclic aluminoxane compounds of the formula (III) or (IV) 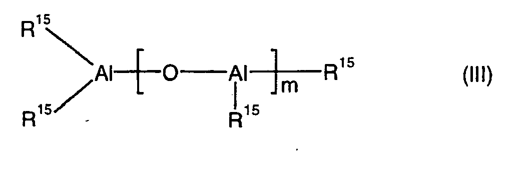 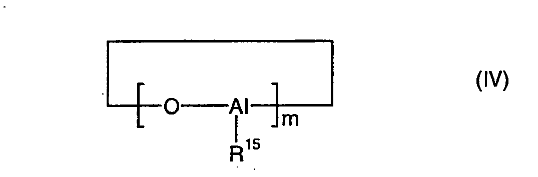 where
- R¹⁵: is a C₁-C₄-alkyl group, preferably a methyl or ethyl group, and m is an integer from 5 to 30, preferably from 10 to 25.

These oligomeric aluminoxane compounds are usually prepared by reaction of a solution of trialkylaluminum with water. In general, the oligomeric aluminoxane compounds obtained in this way are in the form of mixtures of both linear and cyclic chain molecules which differ in length, so that m is to be regarded as a mean. The aluminoxane compounds can also be present in admixture with other metal alkyls, preferably aluminum alkyls.

Furthermore, modified aluminoxanes in which some of the hydrocarbon radicals or hydrogen atoms have been replaced by alkoxy, aryloxy, siloxy or amide radicals can also be used in place of the aluminoxane compounds of the formula (III) or (IV).

It has been found to be advantageous to use the novel organometallic transition metal compound of the formula (I) and the aluminoxane compounds in such amounts that the atomic ratio of aluminum from the aluminoxane compounds to the transition metal from the organometallic transition metal compound is in the range from 10:1 to 1000:1, preferably in the range from 20:1 to 500:1 and in particular in the range from 30:1 to 400:1.

As strong, uncharged Lewis acids, preference is given to compounds of the formula (V)

M³X¹X²X³ (V)

where
- M³: is an element of group 13 of the Periodic Table of the Elements, in particular B, Al or Ga, preferably B,
- X¹, X² and X³: are each, independently of one another, hydrogen, C₁-C₁₀-alkyl, C₆-C₁₅-aryl, alkylaryl, arylalkyl, haloalkyl or haloaryl each having from 1 to 10 carbon atoms in the alkyl radical and from 6 to 20 carbon atoms in the aryl radical or fluorine, chlorine, bromine or iodine, in particular haloaryl, preferably pentafluorophenyl.

Further examples of strong, uncharged Lewis acids are given in WO 00/31090.

Particular preference is given to compounds of the formula (V) in which X¹, X² and X³ are identical, preferably tris(pentafluorophenyl)borane.

Strong uncharged Lewis acids suitable as cation-forming compounds also include the reaction products from the reaction of a boronic acid with two equivalents of an aluminum trialkyl or the reaction products from the reaction of an aluminum trialkyl with two equivalents of an acidic fluorinated, in particular perfluorinated, carbon compound such as pentafluorophenol or bis-(pentafluorophenyl)borinic acid.
Suitable ionic compounds having Lewis-acid cations include salt-like compounds of the cation of the formula (VI)

[(Y^{a+})Q₁Q₂...Q_{z}]^{d+} (VI)

where
- Y: is an element of groups 1 to 16 of the Periodic Table of the Elements,
- Q₁ to Q_{z}: are singly negatively charged groups such as C₁-C₂₈-alkyl, C₆-C₁₅-aryl, alkylaryl, arylalkyl, haloalkyl, haloaryl each having from 6 to 20 carbon atoms in the aryl radical and from 1 to 28 carbon atoms in the alkyl radical, C₃-C₁₀-cycloalkyl which may bear C₁-C₁₀-alkyl groups as substituents, halogen, C₁-C₂₈-alkoxy, C₆-C₁₅-aryloxy, silyl or mercaptyl groups,
- a: is an integer from 1 to 6 and
- z: is an integer from 0 to 5, and
- d: corresponds to the difference a - z, but d is greater than or equal to 1.

Particularly useful cations are carbonium cations, oxonium cations and sulfonium cations and also cationic transition metal complexes. Particular mention may be made of the triphenylmethyl cation, the silver cation and the 1,1'-dimethylferrocenyl cation. They preferably have noncoordinating counterions, in particular boron compounds as are also mentioned in WO 91/09882, preferably tetrakis(pentafluorophenyl)borate.

Salts having noncoordinating anions can also be prepared by combining a boron or aluminum compound, e.g. an aluminum alkyl, with a second compound which can react to link two or more boron or aluminum atoms, e.g. water, and a third compound which forms an ionizing ionic compound with the boron or aluminum compound, e.g. triphenylchloromethane. In addition, a fourth compound which likewise reacts with the boron or aluminum compound, e.g. pentafluorophenol, can be added.

Ionic compounds containing Brönsted acids as cations preferably likewise have noncoordinating counterions. As Brönsted acid, particular preference is given to protonated amine or aniline derivatives. Preferred cations are N,N-dimethylanilinium, N,N-dimethylcyclohexylammonium and N,N-dimethylbenzylammonium and also derivatives of the latter two.

Preferred ionic compounds as cation-forming compounds are, in particular, N,N-dimethylanilinium tetrakis(pentafluorophenyl) borate, N,N-dimethylcyclohexylammonium tetrakis(pentafluorophenyl) borate and N,N-dimethylbenzylammonium tetrakis(pentafluorophenyl) borate.

It is also possible for two or more borate anions to be joined to one another, as in the dianion [(C₆F₅)₂B-C₆F₄-B(C₆F₅)₂]²⁻, or the borate anion can be bound via a bridge having a suitable functional group to the surface of a support particle.

Further suitable cation-forming compounds are listed in WO 00/31090.

The amount of strong, uncharged Lewis acids, ionic compounds having Lewis-acid cations or ionic compounds containing Brönsted acids as cations is usually from 0.1 to 20 equivalents, preferably from 1 to 10 equivalents, based on the novel organometallic transition metal compound of the formula (I).

Suitable cation-forming compounds also include boron-aluminum compounds such as di-[bis(pentafluorophenyl)boroxy]methylalane. Examples of such boron-aluminum compounds are disclosed in WO 99/06414.

It is also possible to use mixtures of all the abovementioned cation-forming compounds. Preferred mixtures comprise aluminoxanes, in particular methylaluminoxane, and an ionic compound, in particular one containing the tetrakis(pentafluorophenyl)borate anion, and/or a strong uncharged Lewis acid, in particular tris(pentafluorophenyl)borane.

Both the novel organometallic transition metal compound of the formula (I) and the cation-forming compounds are preferably used in a solvent, preferably an aromatic hydrocarbon having from 6 to 20 carbon atoms, in particular xylenes and toluene.

The catalyst can further comprise a metal compound of the formula (VII),

M⁴(R¹⁶)ᵣ(R¹⁷)ₛ(R¹⁸)ₜ (VII)

where
- M⁴: is an alkali metal, an alkaline earth metal or a metal of group 13 of the Periodic Table, i.e. boron, aluminum, gallium, indium or thallium,
- R¹⁶: is hydrogen, C₁-C₁₀-alkyl, C₆-C₁₅-aryl, alkylaryl or arylalkyl each having from 1 to 10 carbon atoms in the alkyl part and from 6 to 20 carbon atoms in the aryl part,
- R¹⁷ and R¹⁸: are identical or different and are each hydrogen, halogen, C₁-C₁₀-alkyl, C₆-C₁₅-aryl, alkylaryl, arylalkyl or alkoxy each having from 1 to 10 carbon atoms in the alkyl radical and from 6 to 20 carbon atoms in the aryl radical,
- r: is an integer from 1 to 3
and
- s and t: are integers from 0 to 2, where the sum r+s+t corresponds to the valence of M⁴,
where the metal compound of the formula (VII) is usually not identical to the cation-forming compound. It is also possible to use mixtures of various metal compounds of the formula (VII).

Among the metal compounds of the formula (VII), preference is given to those in which
- M⁴: is lithium, magnesium or aluminum and
- R¹⁷ and R¹⁸: are each C₁-C₁₀-alkyl.

Particularly preferred metal compounds of the formula (VII) are n-butyllithium, n-butyl-n-octylmagnesium, n-butyl-n-heptylmagnesium, tri-n-hexylaluminum, triisobutylaluminum, triethylaluminum and trimethylaluminum and mixtures thereof.

When a metal compound of the formula (VII) is used, it is preferably present in the catalyst in such an amount that the molar ratio of M⁴ from formula (VII) to transition metal M¹ from the novel organometallic transition metal compound of the formula (I) is from 800:1 to 1:1, in particular from 200:1 to 2:1.

Particular preference is given to a catalyst system comprising a novel organometallic transition metal compound of the formula (I) and at least one cocatalyst as cation-forming compound and also a support.

To obtain such a supported catalyst system, the unsupported catalyst system can be reacted with a support. The order in which the support, the organometallic transition metal compound according to the present invention and the cocatalyst are combined is in principle immaterial. The organometallic transition metal compound according to the present invention and the cocatalyst can be fixed to the support independently of one another or simultaneously. After the individual process steps, the solid can be washed with suitable inert solvents such as aliphatic or aromatic hydrocarbons.

As support, preference is given to using finely divided supports which can be any organic or inorganic, inert solid. In particular, the support can be a porous solid such as talc, a sheet silicate, an inorganic oxide or a finely divided polymer powder (e.g. polyolefin).

Suitable inorganic oxides may be found among the oxides of elements of groups 2, 3, 4, 5, 13, 14, 15 and 16 of the Periodic Table of the Elements. Examples of oxides preferred as supports include silicon dioxide, aluminum oxide and mixed oxides of the elements calcium, aluminum, silicon, magnesium or titanium and also corresponding oxide mixtures. Other inorganic oxides which can be used alone or in combination with the abovementioned preferred oxidic supports are, for example, MgO, ZrO₂, TiO₂ or B₂O₃. An example of a preferred mixed oxide is calcined hydrotalcite.

The support materials used preferably have a specific surface area in the range from 10 to 1000 m²/g, a pore volume in the range from 0.1 to 5 ml/g and a mean particle size of from 1 to 500 µm. Preference is given to supports having a specific surface area in the range from 50 to 500 m²/g, a pore volume in the range from 0.5 to 3.5 ml/g and a mean particle size in the range from 5 to 350 µm. Particular preference is given to supports having a specific surface area in the range from 200 to 400 m²/g, a pore volume in the range from 0.8 to 3.0 ml/g and a mean particle size of from 10 to 100 µm.

The inorganic support can be subjected to a thermal treatment, e.g. to remove adsorbed water. Such a drying treatment is generally carried out at from 80 to 300°C, preferably from 100 to 200°C, with drying at from 100 to 200°C preferably being carried out under reduced pressure and/or under a blanket of inert gas (e.g. nitrogen), or the inorganic support can be calcined at from 200 to 1000°C to produce the desired structure of the solid and/or the desired OH concentration on the surface. The support can also be treated chemically using customary desiccants such as metal alkyls, preferably aluminum alkyls, chlorosilanes or SiCl₄, or else methylalumoxane. Appropriate treatment methods are described, for example, in WO 00/31090. The inorganic support material can also be chemically modified. For example, treatment of silica gel with (NH₄)₂SiF₆ leads to fluorination of the silica gel surface, or treatment of silica gels with silanes containing nitrogen-, fluorine- or sulfur-containing groups leads to correspondingly modified silica gel surfaces.

Organic support materials such as finely divided polyolefin powders (e.g. polyethylene, polypropylene or polystyrene) can also be used and are preferably likewise freed of adhering moisture, solvent residues or other impurities by appropriate purification and drying operations before use. It is also possible to use functionalized polymer supports, e.g. ones based on polystyrenes, via whose functional groups, for example ammonium or hydroxy groups, at least one of the catalyst components can be fixed.

In a preferred method of preparing the supported catalyst system, at least one of the novel organometallic transition metal compounds of the formula (I) is brought into contact with at least one cocatalyst as cation-forming compound in a suitable solvent, preferably giving a soluble reaction product, an adduct or a mixture.

The preparation obtained in this way is then brought into contact with the dehydrated or passivated support material, the solvent is removed and the resulting supported catalyst system is dried to ensure that all or most of the solvent is removed from the pores of the support material. The supported catalyst is obtained as a free-flowing powder. Examples of the industrial implementation of the above process are described in WO 96/00243, WO 98/40419 or WO 00/05277.

In a further preferred embodiment, the cation-forming compound is firstly applied to the support component and this supported cation-forming compound is subsequently brought into contact with the organometallic transition metal compound of the invention.

Further cocatalyst systems of importance are therefore combinations obtained by combining the following components:
- 1^{st} component:: at least one defined boron or aluminum compound,
- 2^{nd} component:: at least one uncharged compound which has at least one acidic hydrogen atom,
- 3^{rd} component: at least one support, preferably an inorganic oxidic support, and optionally as 4^{th} component a base, preferably an organic nitrogen-containing base, for example an amine, an aniline derivative or a nitrogen heterocycle.

The boron or aluminum compounds used in the preparation of these supported cocatalysts are preferably compounds of the formula (VIII) 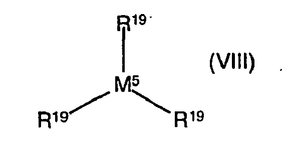 where
- R¹⁹: are identical or different and are each hydrogen, halogen, C₁-C₂₀-alkyl , C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl, C₇-C₄₀-haloalkylaryl or an OSiR²⁰₃ group, where
- R²⁰: are identical or different and are each hydrogen, halogen, C₁-C₂₀-alkyl, C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl, C₇-C₄₀-haloalkylaryl, preferably hydrogen, C₁-C₈-alkyl or C₇-C₂₀-arylalkyl, and
- M⁵: is boron or aluminum, preferably aluminum.

Particularly preferred compounds of the formula (VIII) are trimethylaluminum, triethylaluminum and triisobutylaluminum.

The uncharged compounds which have at least one acidic hydrogen atom and can react with compounds of the formula (VIII) are preferably compounds of the formula (IX), (X) or (XI), 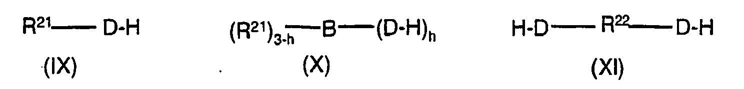 where
- R²¹: are identical or different and are each hydrogen, halogen, a boron-free C₁-C₄₀ group such as C₁-C₂₀-alkyl, C₁-C₂₀-haloalkyl, C₁-C₁₀-alkoxy, C₆-C₂₀-aryl, C₆-C₂₀-haloaryl, C₆-C₂₀-aryloxy, C₇-C₄₀-arylalky, C₇-C₄₀-haloarylalkyl, C₇-C₄₀-alkylaryl, C₇-C₄₀-haloalkylaryl, an Si(R²³)₃ group or a CH(SiR²³₃)₂ group, where
- R²³: is a boron-free C₁-C₄₀ group such as C₁-C₂₀-alkyl, C₁-C₂₀-haloalkyl, C₁-C₁₀alkoxy, C₆-C₂₀-aryl, C₆-C₂₀-haloaryl, C₆-C₂₀-aryloxy, C₇-C₄₀-arylalkyl, C₇-C₄₀-haloarylalkyl, C₇-C₄₀-alkylaryl, C₇-C₄₀-haloalkylaryl, and
- R²²: is a divalent C₁-C₄₀ group such as C₁-C₂₀-alkylene, C₁-C₂₀-haloalkylene, C₆-C₂₀-arylene, C₆-C₂₀-haloarylene, C₇-C₄₀-arylalkylene, C₇-C₄₀-haloarylalkylene, C₇-C₄₀-alkylarylene, C₇-C₄₀-haloalkylarylene,
- D: is an element of group 16 of the Periodic Table of the Elements or an NR²⁴ group, where R²⁴ is hydrogen or a C₁-C₂₀-hydrocarbon radical such as C₁-C₂₀-alkyl or C₆-C₂₀-aryl, preferably oxygen, and
- h: is 1 or 2.

Suitable compounds of the formula (IX) include water, alkoxides, phenol derivatives, thiophenol derivatives or aniline derivatives, with the halogenated and especially the perfluorinated alcohols and phenols being of particular importance. Examples of particularly useful compounds are pentafluorophenol, 1,1-bis(pentafluorophenyl)methanol and 4-hydroxy-2,2',3,3',4,4',5,5',6,6'-nonafluorobiphenyl.
Suitable compounds of the formula (X) include boronic acids and borinic acids, in particular borinic acids having perfluorinated aryl radicals, for example (C₆F₅)₂BOH.
Suitable compounds of the formula (XI) include dihydroxy compounds in which the divalent carbon-containing group is preferably halogenated and in particular perfluorinated. An example of such a compound is 4,4'-dihydroxy-2,2',3,3',5,5',6,6'-octafluorobiphenyl hydrate.

Examples of combinations of compounds of the formula (VIII) with compounds of the formula (IX) or (XI) are trimethylaluminum/pentafluorophenol, trimethylaluminum/1-bis(pentafluorophenyl)-methanol, trimethylaluminum/4-hydroxy-2,2',3,3',4,4',5,5',6,6'-nonafluorobiphenyl, triethylaluminum/pentafluorophenol and triisobutylaluminum/pentafluorophenol and triethylaluminum/4,4'-dihydroxy-2,2',3,3',5,5',6,6'-octafluorobiphenyl hydrate, with, for example, reaction products of the following type being able to be formed.

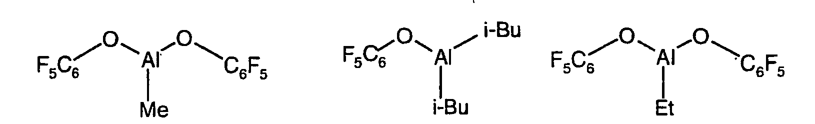

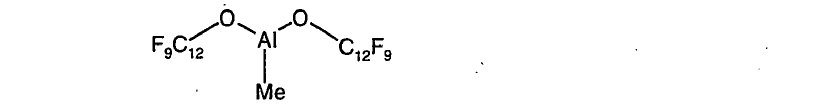

Examples of reaction products from the reaction of at least one compound of the formula (VIII) with at least one compound of the formula (X) are:

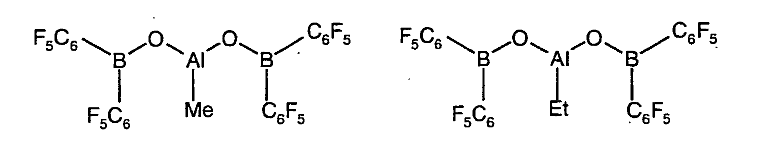

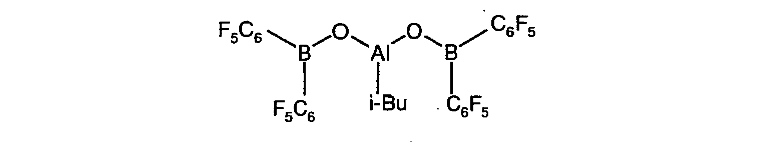

The order in which the components are combined is in principle immaterial.

If desired, the reaction products from the reaction of at least one compound of the formula (VIII) with at least one compound of the formula (IX), (X) or (XI) and optionally the organic nitrogen base are additionally combined with an organometallic metal compound of the formula (III), (IV), (V) and /or (VII) and then reacted with the support to form the supported cocatalyst system.

In a preferred embodiment, the 1^{st} component, e.g. compounds of the formula (VIII), and the 2^{nd} component, e.g. compounds of the formulae (IX), (X) or (XI), and also a support as 3^{rd} component and a base as 4^{th} component are combined separately and subsequently reacted with one another, preferably in an inert solvent or suspension medium. The supported cocatalyst formed can be freed of the inert solvent or suspension medium before being reacted with the novel organometallic transition metal compound of the formula (I) and, if desired, a metal compound of the formula (VII) to form the catalyst system.

It is also possible for the catalyst solid firstly to be prepolymerized with α-olefins, preferably linear C₂-C₁₀-1-alkenes and in particular ethylene or propylene, and the resulting prepolymerized catalyst solid then to be used in the actual polymerization. The mass ratio of catalyst solid used in the prepolymerization to monomer polymerized onto it is usually in the range from 1:0.1 to 1:200.

Furthermore, a small amount of an olefin, preferably an α-olefin, for example vinylcyclohexane, styrene or phenyldimethylvinylsilane, as modifying component, an antistatic or a suitable inert compound such as a wax or oil can be added as additive or after preparation of the supported catalyst system. The molar ratio of additives to organometallic transition metal compound according to the present invention is usually from 1:1000 to 1000:1, preferably from 1:5 to 20:1.

The novel organometallic transition metal compounds of the formula (I) or the catalyst systems in which they are present are suitable for the polymerization or copolymerization of olefins.

The present invention therefore also provides a process for preparing polyolefins by polymerization or copolymerization of at least one olefin in the presence of a catalyst system comprising at least one of the novel organometallic transition metal compounds of the formula (I).

In general, the catalyst system is used together with a further metal compound of the formula (VII), which may be different from the metal compound or compounds of the formula (VII) used in the preparation of the catalyst system, for the polymerization or copolymerization of olefins. The further metal compound is generally added to the monomer or the suspension medium and serves to free the monomer of substances which can adversely affect the catalyst activity. It is also possible to add one or more further cation-forming compounds to the catalyst system during the polymerization process.

The olefins can be functionalized, olefinically unsaturated compounds such as ester or amide derivatives of acrylic or methacrylic acid, for example acrylates, methacrylates or acrylonitrile, or be nonpolar olefinic compounds, including aryl-substituted α-olefins.

Preference is given to polymerizing olefins of the formula Rₘ-CH=CH-Rₙ, where Rₘ and Rₙ are identical or different and are each a hydrogen atom or an organic radical having from 1 to 20 carbon atoms, in particular from 1 to 10 carbon atoms, and Rₘ and Rₙ together with the atoms connecting them can also form one or more rings.

Examples of such olefins are 1-olefins having from 2 to 40, preferably from 2 to 10, carbon atoms, e.g. ethene, propene, 1-butene, 1-pentene, 1-hexene, 1-heptene, 1-octene, 1-decene or 4-methyl-1-pentene, or unsubstituted or substituted vinylaromatic compounds such as styrene and styrene derivatives, or dienes such as 1,3-butadiene, 1,4-hexadiene, 1,7-octadiene, 5-ethylidene-2-norbornene, norbornadiene, ethylnorbornadiene, or cyclic olefins such as norbornene, tetracyclododecene or methylnorbornene.

The catalyst system of the present invention is particularly preferably used for homopolymerizing propene or ethene or copolymerizing ethene with C₃-C₈-α-olefins such as propene, 1-butene, 1-pentene, 1-hexene and/or 1-octene and/or cyclic olefins such as norbornene and/or dienes having from 4 to 20 carbon atoms, e.g. 1,4-hexadiene, norbornadiene, ethylidenenorbornene or ethylnorbornadiene. Particular preference is given to copolymerizing propene with ethene and/or 1-butene. Examples of such copolymers are propene-ethene, propene-1-butene, ethene-1-hexene and ethene-1-octene copolymers and ethene-propene-ethylidenenorbornene and ethene-propene-1,4-hexadiene terpolymers.

The polymerization can be carried out in a known manner in bulk, in suspension, in the gas phase or in a supercritical medium in the customary reactors used for the polymerization of olefins. It can be carried out batchwise or preferably continuously in one or more stages. Solution processes, suspension processes, stirred gas-phase processes or gas-phase fluidized-bed processes are all possible. As solvent or suspension medium, it is possible to use inert hydrocarbons, for example isobutane, or else the monomers themselves.

The polymerizations can be carried out at from -60 to 300°C and pressures in the range from 0.5 to 3000 bar. Preference is given to temperatures in the range from 50 to 200°C, in particular from 60 to 100°C, and pressures in the range from 5 to 100 bar, in particular from 15 to 70 bar. The mean residence times are usually from 0.5 to 5 hours, preferably from 0.5 to 3 hours. Molar mass regulators, for example hydrogen, or customary additives such as antistatics can also be used in the polymerization. The catalyst system of the present invention can be used directly for the polymerization, i.e. it is introduced in pure form into the polymerization system, or it is admixed with inert components such as paraffins, oils and waxes to improve the meterability.

The novel organometallic transition metal compounds of the formula (I) or the catalyst systems in which they are present are especially useful for preparing polypropylene/propene-ethene copolymer mixtures.

The invention therefore also provides a process for preparing polypropylene/propene-ethene copolymer mixtures in the presence of a catalyst system as described above.

The polymers (hereinafter also referred to as (co)polymers) prepared using the catalyst system of the present invention display a uniform particle morphology and contain no fines. No deposits or cake material are/is formed in the polymerization using the catalyst system of the present invention.

The (co)polymers obtainable using the catalyst system of the present invention include both homopolymers and random copolymers of propene. Their molar mass M_{w} (measured by gel permeation chromatography) is in the range from 100 000 to 1 000 000 g/mol and their M_{w}/Mₙ (measured by gel permeation chromatography) is in the range from 1.8 to 4.0, preferably from 1.8 to 3.5. Random copolymers of propene contain subordinate amounts of monomers which are copolymerizable with propene, for example C₂-C₈-alk-1-enes such as ethene, 1-butene, 1-pentene, 1-hexene or 4-methyl-1-pentene. It is also possible to use two or more different comonomers, which then gives, for example, random terpolymers.

The catalyst system of the present invention is particularly useful for preparing homopolymers of propene or copolymers of propene with up to 50% by weight of other copolymerizable 1-alkenes having up to 8 carbon atoms. The copolymers of propene are random copolymers or block or high-impact copolymers. If the copolymers of propene have a random structure, they generally contain up to 50% by weight, preferably up to 15% by weight, particularly preferably up to 5% by weight, of other 1-alkenes having up to 8 carbon atoms, in particular ethene, 1-butene, 4-methyl-1-pentene or a mixture of ethene and 1-butene, ethene and 1-hexene or ethene and 4-methyl-1-pentene.

Further copolymers which can be prepared using the catalyst system of the present invention are block or high-impact copolymers of propene, which are prepared by preparing a propylene homopolymer or random copolymer of propene with from 0.001 to 15% by weight, preferably from 0.01 to 6% by weight, of other 1-alkenes having up to 8 carbon atoms (e.g. ethene, 1-butene, 1-hexene, 1-octene, 4-methyl-1-pentene) in a first step and then, in a second step, polymerizing a propene-ethene copolymer which has an ethene content of from 15 to 80% by weight and may further comprise additional C₄-C₈-1-alkenes (e.g. 1-butene, 1-hexene, 1-octene, 4-methyl-1-pentene) onto the polymer prepared in the first step. In general, the amount of propene-ethene copolymer (which may further comprise 1-butene, 1-hexene, 1-octene, 4-methyl-1-pentene as further monomers) polymerized on is such that the copolymer produced in the second step makes up from 3 to 60% by weight of the end product.

The propylene homopolymers and copolymers prepared using the catalyst system of the present invention have a content of meso-configured diads (measured by ¹³C-NMR spectroscopy, see examples) of at least 90%, preferably at least 95% and particularly preferably at least 97%.

Random copolymers which have been produced using single-site catalysts (e.g. metallocene catalysts) are distinguished from, for example, Ziegler-Natta-catalyzed copolymers having a comparable comonomer content by a series of properties:
- Single-site-catalyzed copolymers have a uniform comonomer distribution over their molar mass spectrum. Such a distribution can, for example, be determined by means of a coupled GPC-IR measurement.
- In single-site-catalyzed copolymers, the comonomers are randomly distributed, while in the case of Ziegler-Natta-catalyzed copolymers the comonomer tends to be incorporated in blocks even at low comonomer contents. It fluctuates little as long as the fractions make up a sufficiently large proportion (at least 10%) of the total polymer. In the case of the copolymers prepared using the catalyst systems of the present invention, the comonomer content fluctuates by not more than 10%, preferably not more than 5%, particularly preferably not more than 1.5%, between the fractions making up a sufficiently large proportion of the copolymer.
- Single-site-catalyzed copolymers have a narrow molar mass distribution ex reactor (M_{w}/Mₙ is generally <= 3.0). Ziegler-Natta-catalyzed copolymers have broader molar mass distributions ex reactor.
- Single-site-catalyzed copolymers also have a lower proportion of soluble material. At a comonomer content of 10 mol% of ethene, the proportion of ether-soluble material is less than 5% by weight.

A combination of the abovementioned features also leads to the polymers (homopolymers and copolymers) prepared using the catalyst system of the present invention being eluted within a narrow temperature range in a TREF. In the case of the homopolymers and random copolymers prepared using the catalyst system of the present invention, from 80 to 100% by weight is eluted within a temperature range extending from 15°C below to 15°C above the temperature of maximum elution (peak temperature). The range preferably extends from 15°C below to 10°C above the peak temperature and particularly preferably from 10°C below to 10°C above the peak temperature.

The polymers (homopolymers and copolymers) prepared using the catalyst system of the present invention are suitable for producing strong, hard and stiff moldings, fibers, filaments, injection-molded parts, films, plates or large hollow bodies (e.g. pipes). The moldings have, in particular, a high toughness, even at temperatures below 20°C, in combination with a high stiffness.

Moldings (e.g. injection-molded articles) comprising the block or high-impact copolymers prepared using the catalyst system of the present invention are generally produced by the customary injection-molding processes known to those skilled in the art and have a novel property combination of stiffness, toughness and transparency and also display little stress whitening.

The E modulus, as a measure of the stiffness of the copolymers prepared using the catalyst system of the present invention, measured in a tensile test in accordance with ISO 527 is generally in the range from 500 to 6000 MPa, preferably in the range from 800 to 2000 MPa, very particularly preferably in the range from 900 to 1400 MPa.

The Charpy impact strength, as a measure of the toughness of the copolymers prepared using the catalyst system of the present invention, measured in accordance with ISO 179-2/1 eU is > 200 kJ/m² at 23°C and > 20 kJ/m² at - 20°C. Preference is given to no fracture of the test specimen being recorded at 23°C.

The haze, as complementary value to the transparency (%transparency + %haze = 100 %), determined in accordance with ASTM D 1003 of the copolymers prepared using the catalyst system of the present invention is preferably less than 40%, particularly preferably less than 30%.

The injection-molded articles produced from the above-described polymers generally contain customary amounts of customary additives known to those skilled in the art, e.g. stabilizers, lubricants and mold release agents, fillers, nucleating agents, antistatics, plasticizers, dyes, pigments or flame retardants. In general, these are incorporated during the granulation of the product formed as a powder in the polymerization.

Customary stabilizers are antioxidants such as sterically hindered phenols, processing stabilizers such as phosphites or phosphonites, acid scavengers such as calcium stearate or zinc stearate or dihydrotalcite, sterically hindered amines or UV stabilizers. In general, the propylene copolymer compositions according to the present invention contain one or more of the stabilizers in amounts of up to 2% by weight.

Suitable lubricants and mold release agents are, for example, fatty acids, calcium or zinc salts of fatty acids, fatty acid amides or low molecular weight polyolefin waxes, which are usually used in concentrations of up to 2% by weight.

Possible fillers are, for example, talc, chalk or glass fibers, which can usually be used in amounts of up to 50% by weight.

Suitable nucleating agents are, for example, inorganic additives such as talc, silica or kaolin, salts of monocarboxylic or polycarboxylic acids, e.g. sodium benzoate or aluminum tert-butylbenzoate, dibenzylidenesorbitol or its C₁-C₈-alkyl-substituted derivatives such as methyldibenzylidenesorbitol, ethyldibenzylidenesorbitol or dimethyldibenzylidenesorbitol, or salts of diesters of phosphoric acid, e.g. sodium 2,2'-methylenebis(4,6-di-tert-butylphenyl)phosphate. The amount of nucleating agents present in the propylene polymer composition is generally up to 5% by weight.

Such additives are generally commercially available and are described, for example, in Gächter/Müller, Plastics Additives Handbook, 4th Edition, Hansa Publishers, Munich, 1993.

The invention is illustrated by the following nonlimiting examples.

### Examples

### General

The letter "c" at the beginning of an experiment number or substance designation indicates experiments or substances which are not according to the present invention but have been included for comparative purposes.

### Preparation of the catalyst:

0.206 mmol of a metallocene dichloride were added at room temperature to 4.33 mmol of MAO (30% strength by weight solution in toluene, from Albemarle). The solution was allowed to stand overnight at room temperature and was subsequently diluted with 10.9 ml of toluene. The diluted solution was carefully added to 10 g of silica (Sylopol 948 calcined at 600°C, from Grace). Particular attention was paid to a uniform distribution of the colored solution over the support material. After 10 minutes, the flask containing the catalyst suspension was connected to a vacuum line and dried until the content of volatiles had been reduced to less than 5% by weight.

### Polymerizations:

Homopolymerizations were carried out in a 16 l reactor charged with 10 l of liquid propene or in a 5 l reactor charged with 3 l of liquid propene. Before being filled, the reactors were made inert by means of nitrogen. A 20% strength by weight solution of triethylaluminum in Exsol (from Witco) was metered into the reactors (8 ml in the case of the large reactor, 2.4 ml in the case of the small reactor) and the mixtures were stirred at 30°C for 15 minutes. If hydrogen was added, its concentration was set to 0.5 standard liters per liter of liquid propylene. A suspension of the respective catalyst in 20 ml of Exsol was introduced into the reactors. The reactor temperature was increased to 65°C and maintained at this level for 60 minutes. The polymerizations were stopped by venting the reactor. The polymers were dried overnight under reduced pressure before being analyzed.
Copolymerizations were carried out in a 10 l reactor charged with 3.5 l of liquid propylene. A 20% strength by weight solution of triethylaluminum in Exsol (from Witco) was metered into the reactor and the mixture was stirred at 30°C for 15 minutes. A suspension of the respective catalyst in 20 ml of Exsol was introduced into the reactor. Ethylene was metered into the reactor (total of 160 g). The reactor temperature was increased to 65°C and maintained at this level for 60 minutes. The pressure in the reactor was maintained at 32 bar by continuous addition of ethylene (a further amount of about 47 g of ethylene was introduced). The polymerizations were stopped by venting the reactor. The polymers were dried overnight under reduced pressure before being analyzed.

### Determination of the melting point:

The melting point Tₘ was determined by means of a DSC measurement in accordance with ISO standard 3146 in a first heating phase at a heating rate of 20°C per minute to 200°C, a dynamic crystallization at a cooling rate of 20°C per minute down to 25°C and a second heating phase at a heating rate of 20°C per minute back to 200°C. The melting point was then the temperature at which the curve of enthalpy versus temperature measured in the second heating phase displayed a maximum.

### Determination of the viscosity number (IV):

The viscosity number was determined on an Ubbelohde viscometer PVS 1 with an S 5 measuring head (both from Lauda) in decalin at 135°C. To prepare the sample, 20 mg of polymer were dissolved in 20 ml of decalin at 135°C over a period of 2 hours. 15 ml of the solution were placed in the viscometer; the instrument carried out a minimum of three running-out time measurements until a consistent result had been obtained. The IV was calculated from the running-out times according to IV = (t/t₀-1)*1/c where t : mean of the running-out time of the solution, to: mean of the running-out time of the solvent, c: concentration of the solution in g/ml.

### Gel permeation chromatography:

Gel permeation chromatography (GPC) was carried out at 145°C in 1,2,4-trichlorobenzene using a GPC apparatus 150C from Waters. The data were evaluated using the software Win-GPC from HS-Entwicklungsgesellschaft für wissenschaftliche Hard- und Software mbH, Ober-Hilbersheim. The calibration of the columns was carried out by means of polypropylene standards having molar masses of from 100 to 10⁷ g/mol. Mass average molar masses (M_{w}) and number average molar masses (Mₙ) of the polymers were determined. The Q value is the ratio of mass average (M_{w}) to number average (Mₙ).

### Examples:

### 1. Dimethylsilanediyl(2,6-dimethyl-4-(4'-tert-butylphenyl)-1-indenyl)(2-isopropyl-4-(4'-tert-butylphenyl)-1-indenyl) zirconium dichloride (1)

### 1a Preparation of 7-bromo-2,5-dimethyl-1-indanone (1a)

43.8 g (329 mmol) of aluminum chloride and 47 g (274 mmol) of 4-bromotoluene were placed in a reactor and mixed with 26.6 (287 mmol) of propionyl chloride. Moderate evolution of HCl gas occurred. The reaction mixture was stirred at room temperature for four hours and was subsequently poured into a mixture of 350 ml of ice water and 35 ml of concentrated HCl. The aqueous phase was extracted twice with 200 ml each time of methylene chloride. The combined organic phase was washed with 200 ml of water, 200 ml of NaHCO₃ solution and NaCl solution and dried over MgSO₄. After removal of the solvent and drying in an oil pump vacuum, 59 g of bromomethylpropiophenone were isolated as a mixture of isomers.
58 g (257 mmol) of the mixture of isomers of bromomethylpropiophenone prepared above and 21.2 ml (765 mmol) of formaldehyde solution were placed in a reaction vessel and a solution of 10.3 g (257 mmol) of NaOH in 515 ml of water was added over a period of 30 minutes. The reaction mixture was stirred at 40°C for two hours. The phases were subsequently separated and the aqueous phase was extracted twice with 200 ml of methylene chloride. The combined organic phases were washed with 200 ml of aqueous HCl solution and subsequently dried over MgSO₄. After removal of the solvent and drying in an oil pump vacuum, 58 g of bromomethyl-methacrylophenone were isolated as a mixture of isomers.
350 g of concentrated sulfuric acid were placed in a reaction vessel at 65°C and 58 g (243 mmol) of the mixture of isomers of bromomethylmethacrylophenone were added dropwise over a period of two hours. The mixture was stirred at 65°C for another 30 minutes and then cooled to room temperature. The reaction mixture was poured into 800 g of ice water. The brownish green suspension formed was extracted three times with 300 ml each time of diethyl ether. The combined organic phases were washed with 300 ml of NaHCO₃ solution, with 300 ml of water and with 300 ml of saturated NaCl solution and subsequently dried over MgSO₄. After removal of the solvent and drying in an oil pump vacuum, 39 g of a mixture of 7-bromo-2,5-dimethyl-1-indanone and 5-bromo-2,7-dimethyl-1-indanone were isolated. Distillation (0.2 bar, 130°C) gave 17 g of 7-bromo-2,5-dimethyl-1-indanone (1 a).
¹H-NMR (400 MHz, CDCl₃): 7.33 (s, 1H, arom-H), 7.18 (s, 1H, arom-H), 3.32-3.26 (m, 1H), 2.73-2.61 (m, 2H), 2.40 (s, 3H), 1.30 (d, 3H)

### 1b Preparation of 2,5-dimethyl-7-(4'-tert-butylphenyl)-1-indanone (1b)

16.45 (68.8 mmol) of 7-bromo-2,5-dimethyl-1-indanone (1 a), 14.71 g (82.6 mmol) of 4-tert-butylphenylboronic acid, 16.05 g (151 mmol) of sodium carbonate, 188 ml of ethylene glycol and 30.7 ml of water were placed in a reaction vessel under a protective gas atmosphere and heated to 80°C. While stirring vigorously, a freshly prepared catalyst solution of 77 mg (0.343 mmol) of palladium acetate and 1.7 ml (1.01 mmol) of an aqueous TPPTS solution (0.6 molar) in 25 ml of water were added to the reaction components and the reaction mixture was refluxed for 3 hours until the reaction was complete. After cooling to room temperature, the ethylene glycol phase was extracted three times with a total of 900 ml of toluene. The combined toluene phases were washed twice with a total of 250 ml of sodium chloride solution and dried over 150 g of sodium sulfate. Removal of the solvent, drying of the residue and subsequent distillation in an oil pump vacuum gave 18.59 g of (1b).
¹H-NMR (400 MHz, CDCl₃): 7.41-7.48 (4H, m, Ph), 7.23 (1H, s, arom-H), 7.12 (1H, s, arom-H), 2.34-3.43 (m, 1H), 2.68-2.75 (m, 2H), 2.47 (s, 3H, CH₃), 1.39 (s, 9H, tert-butyl-H), 1.30 (d, 3H, CH₃).

### 1c Preparation of 2,6-dimethyl-4-(4'-tert-butylphenyl)indene (1c)

2.09 g (55.3 mmol) of sodium borohydride and 18.59 g (55.3 mmol) of 2,5-dimethyl-7-(4'-tert-butylphenyl)-1-indanone (1b) together with 51 ml of toluene were placed in a reaction vessel. At 50°C, 9.8 ml of methanol were slowly added and the reaction mixture was stirred at 50°C for 3 hours. After cooling to room temperature, 35 ml of 2 N sulfuric acid were added and the mixture was stirred for 30 minutes. After phase separation, the organic phase was washed twice with a total of 60 ml of 2 N sulfuric acid, most of the solvent was removed and the residue was taken up in 200 ml of toluene and admixed with 0.2 g of p-toluenesulfonic acid. Water was distilled off from this reaction mixture by refluxing for 1.5 hours on a water separator until the reaction was complete. The reaction mixture was washed once with 100 ml of saturated sodium hydrogencarbonate solution and dried over magnesium sulfate. After removal of the solvent, the residue was dried in an oil pump vacuum. This gave 16.8 g of the desired product (1c).
¹H-NMR (400 MHz, CDCl₃): 7.50-6.97 (m, 6H, arom- H), 6.70 (s, 1H, olefin-H), 3.24 (s, 2H, CH₂-H), 2.35 (s, 3H, CH₃), 2.15 (s, 3H, CH₃), 1.36 (s, 9H, tert-butyl-H).

### 1d Preparation of dimethylsilanediyl-(2-isopropyl-4-(4'-tert-butylphenyl)-1-indene)-(2,6-dimethyl-4-(4'-tert-butylphenyl)-1-indene) (1 d)

8.0 g (26 mmol) of 2,6-dimethyl-4-(4'-tert-butylphenyl)indene (1 c) together with 82 ml of toluene and 3.8 ml of THF were placed in a reaction vessel and 11.0 ml of butyllithium solution (2.68 M in toluene) were added quickly at room temperature. After the addition was complete, the mixture was heated to 80°C and stirred at this temperature for 1 hour. After cooling to room temperature, the reaction mixture was added to a solution of 11.88 g (26 mmol) of 2-isopropyl-7-(4'-tert-butylphenyl)-1-indenyldimethylchlorosilane (prepared by a method analogous to that of WO 01/48034, example 5, page 58) over a period of 1 hour and the resulting mixture was stirred overnight at room temperature. 60 ml of water were added, the phases were separated, the organic phase was washed with 100 ml of water and the combined aqueous phases were extracted twice with a total of 100 ml of toluene. The combined organic phases were dried over magnesium sulfate. After removal of the solvent, the residue was dried in an oil pump vacuum and 18.53 g of (1d) were isolated.
¹H-NMR (400 MHz, CDCl₃): 7.5-7.1 (m, 13H, arom- H), 6.71, 6.62 (each s, each 1H, olefin-H-indene), 3.31, 3.35 (each s, each 1H, CH₂-H), 2.65 (m, 1 H, CH-isopropyl), 2.45, 2.34 (s, 3H, CH₃-H), 1.35, 1.33 (each s, each 9H, tert-butyl), 1.15 (d, 6H, isopropyl-CH₃), -0.07, -0.7 (each d, each 3H, Si-CH₃).

### 1 Preparation of dimethylsilanediyl-(2,6-dimethyl-4-(4'-tert-butylphenyl)-1-indenyl)(2-isopropyl-4-(4'-tert-butylphenyl)-1-indenyl)zirconium dichloride (1)

5 g (7.2 mmol) of (1 d) together with 50 ml of diethyl ether were placed in a reaction vessel and admixed at room temperature with 5.8 ml of butyllithium solution (2.68 M in toluene). After the addition was complete, the mixture was stirred overnight at room temperature. The reaction mixture was cooled to 0°C and 1.68 g (7.2 mmol) of zirconium tetrachloride were added a little at a time. The reaction mixture was stirred at room temperature for 2 hours. The orange precipitate which had been formed was then separated off on a G3 frit and washed twice with 10 ml each time of Et₂O. The orange residue on the frit was dried in an oil pump vacuum to give 3.0 g of pseudo-rac/pseudo-meso complex (1). Recrystallization from toluene gave 1 g of the pseudo-rac compound (1).
¹H-NMR (400 MHz, CDCl₃): 1.041 (d, 6.68 Hz, 3H, i-Pr), 1.105 (d, 6.71 Hz, 3H, i-Pr), 1.333 (s, 9H, t-Bu), 1.337 (s, 15H, t-Bu + Me₂-Si), 2.239 (s, 3H, CH₃), 2.364 (s, 3H, CH₃), 3.3 (septet, 1 H, i-Pr), 6.923 (s, 1 H), 7.017 (s, 1 H), 7.1 - 7.7 (13H, aromatic)

### 2. Dimethylsilanediyl(2-ethyl-6-methyl-4-(4'-tert-butylphenyl)indenyl) (2-isopropyl-4-(4'-tert-butylphenyl)-1-indenyl)zirconium dichloride (2)

### 2a Preparation of 7-bromo-2-ethyl-5-methyl-1-indanone (2a)

Using a method analogous to the preparation of (1a), 187.1 g (1.4 mol) of aluminum trichloride and 239 g (1.4 mol) of 4-bromotoluene were reacted with 149.5 g (1.4 mol) of butyryl chloride. 268 g (1.11 mol) of the resulting mixture of bromomethylbutyrophenone isomers and 325.6 ml (2.32 mol) of urotropin were subsequently placed in a reaction vessel, and 282 ml (6.27 mol) of acetic anhydride were added dropwise over a period of 70 minutes. The reaction mixture was stirred at 80°C for 3.5 hours. 250 ml of water and 527 g of NaOH were subsequently added. After cooling to room temperature, the phases were separated and the aqueous phase was extracted three times with a total of 1500 ml of methylene chloride. The combined organic phases were washed once with 1000 ml of 2 N hydrochloric acid and evaporated to a volume of 370 ml. This solution was added dropwise to 1.84 kg of concentrated sulfuric acid at 70°C over a period of 2.5 hours, with the temperature of the sulfuric acid solution being maintained at 70°C. After cooling to room temperature, the sulfuric acid solution was carefully poured onto 3 kg of ice, and the sulfuric acid solution was extracted three times with a total of 2.5 l of dichloromethane, the combined organic phases were washed with 600 g of saturated NaHCO₃ solution and 300 ml of water and the organic phase was dried over MgSO₄. After removal of the solvent and drying in an oil pump vacuum, 245 g of a mixture of 7-bromo-2-ethyl-5-methyl-1-indanone and 5-bromo-2-ethyl-7-methyl-1-indanone were isolated. Distillation gave a fraction consisting of 50 g of 7-bromo-2-ethyl-5-methyl-1-indanone (2a).
¹H-NMR (400 MHz, CDCl₃): 7.33 (s, 1H, arom-H), 7.19 (s, 1H, arom-H), 3.24-3.18 (m, 1 H), 2.69-2.48 (m, 1 H), 2.64-2.59 (m, 1 H), 2.40 (s, 3H, arom-CH₃), 2.92-2.03 (m, 1H, Et), 1.55-1.48 (m, 1H, Et), 1.00 (dd, 3H, Et)

### 2b Preparation of 2-ethyl-5-methyl-7-(4'-tert-butylphenyl)-1-indanone (2b)

Using a method analogous to Example 1b, 35.2 g (139 mmol) of 7-bromo-2-ethyl-5-methyl-1-indanone (2a), 29.7 g (166.8 mmol) of 4-tert-butylphenylboronic acid, 36.8 g (347.3 mmol) of sodium carbonate, 300 ml of ethylene glycol and 40 ml of water were reacted at 80°C in the presence of a freshly prepared catalyst solution comprising 156 mg (0.695 mmol) of palladium acetate, 3.5 ml (2.08 mmol) of an aqueous TPPTS solution (0.6 molar) and 19 ml of water. 45 g of (2b) were isolated.
¹H-NM R (400 MHz, CDCl₃): 7.41-7.18 (m, 6H, arom- H), 3.23 (dd, 1H, CH₂-H), 2.68 (dd, 1H, CH₂-H), 2.57 (m, 1 H, CH-H), 2.36 (s, 3H, CH₃), 1.96 (q, 2H, CH₂), 1.34 (s, 9H, tert-butyl-H), 1.06 (t, 3H, CH₃).

### 2c Preparation of 2-ethyl-6-methyl-4-(4'-tert-butylphenyl)indene (2c)

Using a method analogous to Example 1c, 6.1 g (161 mmol) of sodium borohydride and 45 g (147 mmol) of (2b) in 100 ml of toluene were reacted with 25.7 ml of methanol and the indanol was isolated after appropriate work-up. The crude indanol was, once again using a method analogous to Example 1 c, reacted in the presence of 200 ml of toluene and 0.3 g of p-toluenesulfonic acid to give the indene (2c), of which 39.8 g were obtained.
¹H-NMR (400 MHz, CDCl₃): 7.48-7.01 (m, 6H, arom-H), 6.74 (s, 1H, olefin-H), 3.28 (s, 2H, CH₂-H), 2.54 (q, 2H, CH₂), 2.37 (s, 3H, CH₃), 1.38 (s, 9H, tert-butyl-H), 1.21 (t, 3H, CH₃).

### 2d Preparation of dimethylsilanediyl-(2-isopropyl-4-(4'-tert-butylphenyl)-1-indene)(2-ethyl-6-methyl-4-(4'-tert-butylphenyl)-1-indene) (2d)

Using a method analogous to Example 1 d, 10.0 g (26 mmol) of 2-ethyl-6-methyl-4-(4'-tert-butylphenyl)indene in 99 ml of toluene and 4.6 ml of THF were deprotonated using 13.2 ml of butyllithium solution (2.68 M in toluene) and reacted with a solution of 12.0 g (26 mmol) of 2-isopropyl-7-(4'-tert-butylphenyl)-1-indenedimethylchlorosilane in 33 ml of toluene. Work-up gave 20.8 g of the bisindenyl ligand (2d).
¹H-NMR (400 MHz, CDCl₃): 7.48-7.01 (m, 13H, arom- H), 6.70, 6.62 (each s, each 1H, olefin-H-indene), 3.41, 3.26 (each s, each 1H, CH₂-H), 2.6-2.5 (m, 3H, CH-isopropyl and CH₂-ethyl), 2.35 (s, 3H, CH₃-H), 1.37, 1.35 (each s, each 9H, tert-butyl), 1.19 (t, 3H, CH₃), 1.15 (d, 6H, isopropyl-CH₃), 0.04-0.7 (each d, each 3H, Si-CH₃).

### 2 Preparation of dimethylsilanediyl-(2-ethyl-6-methyl-4-(4'-tert-butylphenyl)indenyl) (2-isopropyl-4-(4'-tert-butylphenyl)-1-indenyl)zirconium dichloride (2)

Using a method analogous to Example 1, 2 g (2.61 mmol) of (2d) in 20 ml of diethyl ether were admixed with 2.1 ml of buthyllithium solution (2.68 M in toluene) and subsequently reacted with 0.61 g (2.61 mmol). The orange complex was isolated and washed twice with 10 ml of toluene. The residue was dried in an oil pump vacuum. The complex was obtained as a mixture of diastereomers (pseudo-rac and pseudo-meso) in a yield of 0.76 g. Recrystallization from toluene gave the pseudo-rac isomer in a yield of 0.3 g.
¹H-NMR (400 MHz, CDCl₃): 1.04 (d, 6.68 Hz, 3H, i-Pr), 1.10 (d, 6.68 Hz, 3H, i-Pr), 1.10 (t, 3H, Et), 1.326 (s, 3H, CH₃-Si), 1.337 (s, 18H, t-Bu), 1.346 (s, 3H, CH₃-Si), 1.366 (s, 3H, CH₃), 2.46 (m, 1 H, Et), 2.70 (m, 1 H, Et), 3.33 (septet, 1H, i-Pr), 6.956 (s, 1H), 7,013 (s, 1 H), 7.06 - 7.64 (13H, aromatic)

### 3. Dimethylsilanediyl(2,6-dimethyl-4-phenyl-1-indenyl)(2-isopropyl-4-(4'-ten- butylphenyl)-1-indenyl) zirconium dichloride (3)

### 3a Preparation of 2,5-dimethyl-7-phenyl-1-indanone (3a)

24.00 (100 mmol) of 7-bromo-2,5-dimethyl-1-indanone (1a), 16 g (127 mmol) of phenylboronic acid, 24.00 g (226 mmol) of sodium carbonate, 235 ml of ethylene glycol and 40 ml of water were placed in a reaction vessel under a protective gas atmosphere and heated to 80°C. While stirring vigorously, a freshly prepared catalyst solution of 60 mg (0.26 mmol) of palladium acetate and 0.4 ml (0.7 mmol) of an aqueous TPPTS solution (0.6 molar) in 25 ml of water were added to the reaction components and the reaction mixture was refluxed for 3 hours until the reaction was complete. After cooling to room temperature, the ethylene glycol phase was extracted three times with a total of 900 ml of toluene. The combined toluene phases were washed twice with a total of 250 ml of sodium chloride solution and dried over 150 g of sodium sulfate. Removal of the solvent, drying of the residue and subsequent distillation in an oil pump vacuum gave 23.8 g of (3a).

### 3b Preparation of 2,6-dimethyl-4-phenyl-indene (3b)

6.0 g (157 mmol) of sodium borohydride and 23.6 g (100 mmol) of 2,4-dimethyl-7-phenyl-1-indanone (3a) together with 100 ml of toluene were placed in a reaction vessel. At 50°C, 17 ml of methanol were slowly added and the reaction mixture was stirred at 50°C for 3 hours. After cooling to room temperature, 35 ml of 2 N sulfuric acid were added and the mixture was stirred for 30 minutes. After phase separation, the organic phase was washed twice with a total of 60 ml of 2 N sulfuric acid, most of the solvent was removed and the residue was taken up in 200 ml of toluene and admixed with 0.2 g of p-toluenesulfonic acid. Water was distilled off from this reaction mixture by refluxing for 1.5 hours on a water separator until the reaction was complete. The reaction mixture was washed once with 100 ml of saturated sodium hydrogencarbonate solution and dried over magnesium sulfate. After removal of the solvent, the residue was dried in an oil pump vacuum. This gave 20.7 g of the desired product (3b).
¹H-NMR (400 MHz, CDCl₃): 2.11 (s, 3H), 2.40 (s, 3H), 3.31 (s, 2H), 6.61 (s, 1 H), 7.08 (s, 1 H), 7.18 (s, 1H), 7.3-7.6 (5H, Ph)

### 3c Preparation of dimethylsilanediyl-(2-isopropyl-4-(4'-tert-butylphenyl)-1-indene)-(2,6-dimethyl-4-phenyl-1-indene) (3c)

10.0 g (45 mmol) of 2,6-dimethyl-4-phenyl-indene (3b) together with 100 ml of toluene and 3.8 ml of THF were placed in a reaction vessel and 21.8 ml of butyllithium solution (2.5 M in toluene) were added quickly at room temperature. After the addition was complete, the mixture was heated to 80°C and stirred at this temperature for 1 hour. After cooling to room temperature, the reaction mixture was added to a solution of 20 g (52 mmol) of 2-isopropyl-7-(4'-tert-butyl-phenyl)-1-indenyldimethylchlorosilane (prepared by a method analogous to that of WO 01/48034, example 5, page 58) over a period of 1 hour and the resulting mixture was stirred overnight at room temperature. 60 ml of water were added, the phases were separated, the organic phase was washed with 100 ml of water and the combined aqueous phases were extracted twice with a total of 100 ml of toluene. The combined organic phases were dried over magnesium sulfate. After removal of the solvent, the residue was dried in an oil pump vacuum. The reaction mixture was purified through column chromatography (SiO₂, 10-20% CH₂Cl₂/heptane) and 19.0 g of (3c) were isolated (74% yield).
¹H-NMR (400 MHz, CDCl₃): -0.23, -0.18, -0.16, -0.14 (s, 6H, Si-Me2), 1.08-1.13 (3H, i-Pr), 1.22-1.28 (3H, i-Pr), 1.40 (9H, t-Bu), 2.09, 2.25 (3H, Me), 2.40 (3H, Me) 2.64-2.76 (1H, i-Pr), 3.67, 3.72, 3.91, 3.97 (2H, allyl), 6.72, 6.76 (1 H, vinyl), 6.82, 6.84 (1H, vinyl), 7.08-7.55 (m, 14H)

### 3 Preparation of dimethylsilanediyl-(2,6-dimethyl-4-phenyl-1-indenyl)(2-isopropyl-4-(4'-tert-butylphenyl)-1-indenyl)zirconium dichloride (3)

10 g (17.6 mmol) of (3c) together with 150 ml of diethyl ether were placed in a reaction vessel and admixed at room temperature with 14.1 ml (35.3 mmol) of butyllithium solution (2.5 M in toluene). After the addition was complete, the mixture was stirred overnight at room temperature. The reaction mixture was cooled to 0°C and 4.1 g (17.6 mmol) of zirconium tetrachloride were added a little at a time. The reaction mixture was stirred at room temperature for 2 hours. The orange precipitate which had been formed was then separated off on a G3 frit and washed twice with 10 ml each time of Et₂O. The orange residue on the frit was dried in an oil pump vacuum to give 11.6 g of pseudo-rac/pseudo-meso complex (3). Recrystallization from toluene gave 6.4 g of the pseudo-rac compound (3).
¹H-NMR (400 MHz, CDCl₃): 1.05 (3H, d, i-Pr), 1.11 (3H, d, i-Pr), 1.34 (15H, s, t-Bu + Si-Me₂), 2.24 (3H, s, Me), 2.37 (3H, s, Me), 3.33 (1 H, septet, i-Pr), 6.88 (1 H, s, Cp-H), 7.02 (1 H, s, Cp-H), 7.09 (1H, dd), 7.21 (1H, s), 7.35 (1H, s), 3.33-7.38 (2H), 7.42 (2H, t, 7.73Hz), 7.45-7.47 (2H, Ph), 7.62-7.64 (4H, Ph), 7.65 (1 H, d)

### 4. Dimethylsilanediyl(2,6-dimethyl-4-(2,5-dimethylphenyl)-1-indenyl)(2-isopropyl-4-(4'-tert-butylphenyl)-1-indenyl) zirconium dichloride (4)

### 4a Preparation of 2,5-dimethyl-7-(2,5-dimethylphenyl)-1-indanone (4a)

30.00 (126 mmol) of 7-bromo-2,5-dimethyl-1-indanone (1a), 24 g (160 mmol) of 2,5-dimehylphenylboronic acid, 30.00 g (283 mmol) of sodium carbonate, 280 ml of ethylene glycol and 45 ml of water were placed in a reaction vessel under a protective gas atmosphere and heated to 80°C. While stirring vigorously, a freshly prepared catalyst solution of 80 mg (0.34 mmol) of palladium acetate and 0.52 ml (0.9 mmol) of an aqueous TPPTS solution (0.6 molar) in 25 ml of water were added to the reaction components and the reaction mixture was refluxed for 3 hours until the reaction was complete. After cooling to room temperature, the ethylene glycol phase was extracted three times with a total of 900 ml of toluene. The combined toluene phases were washed twice with a total of 250 ml of sodium chloride solution and dried over 150 g of sodium sulfate. Removal of the solvent, drying of the residue and subsequent distillation in an oil pump vacuum gave 33.3 g of (4a).

### 4b Preparation of 2,6-dimethyl-4-(2,5-dimethylphenyl)-indene (4b)

6.0 g (157 mmol) of sodium borohydride and 33.0 g (111 mmol) of 2,5-dimethyl-7-(2,5-dimethylphenyl)-1-indanone (4a) together with 100 ml of toluene were placed in a reaction vessel. At 50°C, 17 ml of methanol were slowly added and the reaction mixture was stirred at 50°C for 3 hours. After cooling to room temperature, 35 ml of 2 N sulfuric acid were added and the mixture was stirred for 30 minutes. After phase separation, the organic phase was washed twice with a total of 60 ml of 2 N sulfuric acid, most of the solvent was removed and the residue was taken up in 200 ml of toluene and admixed with 0.3 g of p-toluenesulfonic acid. Water was distilled off from this reaction mixture by refluxing for 1.5 hours on a water separator until the reaction was complete. The reaction mixture was washed once with 100 ml of saturated sodium hydrogencarbonate solution and dried over magnesium sulfate. After removal of the solvent, the residue was dried in an oil pump vacuum. This gave 30 g of the desired product (4b).

### 4c Preparation of dimethylsilanediyl-(2-isopropyl-4-(4'-tert-butylphenyl)-l-indene)-(2,6-dimethyl-4-(2,5-dimethylphenyl)-1-indene) (4c)

26.0 g (75 mmol) of 2,6-dimethyl-4-(2,5-dimethylphenyl)-indene (4b) together with 100 ml of toluene and 3.8 ml of THF were placed in a reaction vessel and 37.6 ml of n-butyllithium solution (2.5 M in toluene) were added quickly at room temperature. After the addition was complete, the mixture was heated to 80°C and stirred at this temperature for 1 hour. After cooling to room temperature, the reaction mixture was added to a solution of 20 g (52 mmol) of 2-isopropyl-7-(4'-tert-butyl-phenyl)-1-indenyldimethylchlorosilane (prepared by a method analogous to that of WO 01/48034, example 5, page 58) over a period of 1 hour and the resulting mixture was stirred overnight at room temperature. 60 ml of water were added, the phases were separated, the organic phase was washed with 100 ml of water and the combined aqueous phases were extracted twice with a total of 100 ml of toluene. The combined organic phases were dried over magnesium sulfate. After removal of the solvent, the residue was dried in an oil pump vacuum. The reaction mixture was purified through column chromatography (SiO₂, 20% CH₂Cl₂/heptane) and 30.0 g of (4c) were isolated.

### 4 Preparation of dimethylsilanediyl-(2,6-dimethyl-4-(2,5-dimethylphenyl)-1-indenyl)(2-isopropyl-4-(4'-tert-butylphenyl)-1-indenyl)zirconium dichloride (4)

7.1 g (11.9 mmol) of (5c) together with 150 ml of diethyl ether were placed in a reaction vessel and admixed at room temperature with 9.5 ml (23.9 mmol) of n-butyllithium solution (2.5 M in toluene). After the addition was complete, the mixture was stirred overnight at room temperature. The reaction mixture was cooled to 0°C and 2.8 g (11.9 mmol) of zirconium tetrachloride were added a little at a time. The reaction mixture was stirred at room temperature for 2 hours. The orange precipitate which had been formed was then separated off on a G3 frit and washed twice with 10 ml each time of Et₂O. The orange residue on the frit was dried in an oil pump vacuum to give 3.0 g of pseudo-rac/pseudo-meso complex (4). Recrystallization from toluene gave 0.4 g of the pseudo-rac compound (4).
¹H-NMR (400 MHz, CDCl₃): 1.10 (3H, d, i-Pr), 1.11 (3H, d, i-Pr), 1.33 (3H, s, Si-Me), 1.34 (3H, s, Si-Me), 1.35 (9H, t-Bu), 2.00 (3H, Me), 2.23 (3H, s, Me), 2.32 (3H, s, Me), 2.36 (3H, s, Me), 3.35 (1 H, septet, i-Pr), 6.49 (1H, Cp-H), 7.02 (1 H, s, Cp), 7.04-7.12 (2H), 7.08 (1 H, s), 7.33 (1 H, s), 7.35 (1H, d), 7.47-7.49 (4H, Ph), 7.61-7.64 (3H)

### 5. Dimethylsilanediyl(2,5,6-trimethyl-4-(4'-tert-butylphenyl)-1-indenyl)(2-isopropyl-4-(4'-tert-butylphenyl)-1-indenyl) zirconium dichloride (5)

### 5a Preparation of 2,5,6-trimethyl-1-indanone (5a)

50.71 g of AlCl₃ (Aldrich 99%, 380 mmol) were slowly added for 30 min to a mixture of 17.3 g of o-xylene (Acros, 161 mmol), 39 g of 2-Bromoisobutyryl bromide (Aldrich 98%, 166 mmmol) in 500 ml of CH₂Cl₂ at 0° C. The suspension was stirred 17 hours at room temperature and then quenched with 200 g of ice. The organic layer was washed with a 1 M HCl acqueous solution (1 x 200 ml), a saturated NaHCO₃ solution (2 x 200 ml) and water (2 x 200 ml). Then it was dried over Na₂SO₄, filtered and evaporated to dryness under reduced pressure to give 29 g (99 % yield) of a red-brown oil. This oil was determined by ¹H-NMR to contain 70% of the target product and 30% of the isomer 2,6,7-trimethyl1-1indanone. The isomers were separated by distillation.
¹H-NMR (400 MHz, CDCl₃): 1.28 (3H, d, 7.3Hz, Me), 2.29 (3H, s, Me), 2.33 (3H, s, Me), 2.62-2.71 (2H, m), 3.26-3.33 (1 H, m), 7.21 (1 H, s), 7.51 (1H, s)

### 5b Preparation of 4-bromo-2,5,6-trimethyl-1-indanone (5b)

Suspension of 130 g AlCl₃ (0.96 mol) in 500 ml chloroform was treated with 59g (341 mmol) of 2,5,6-trimethyl-1-indanone (5a) at 0 °C under vigorous stirring. After 1 h of stirring the resulting mixture was treated dropwise with 54 g of Br₂ (338 mmol) in 250 ml chloroform for 5 hrs at 0°C and then was stirred overnight. The resulting mixture was poured into 1500 g of water/ice, the organic layer was isolated, washed with 5% NaHCO₃, then with water and finally was dried over MgSO₄. Solution was evaporated to dryness under reduced pressure to give 91 g of a dark oil. This oil was determined by GC-MS to contain 86 % of the desired compound and 8% of dibromide by-product. This mixture was purified by distillation (124-126°C, 0.2 mmbar) to get the desired product (5b).
¹H-NMR (400 MHz, CDCl₃): 1.31 (3H, d, 7.6 Hz, Me), 2.38 (3H, s, Me), 2.45 (3H, s, Me), 2.58-2.59 (1 H, m), 2.69-2.73 (1 H, m), 3.27-3.33 (1 H, m), 7.47 (1 H, s)

### 5c Preparation of 2,5,6-trimethyl-4-(4'-tert-butylphenyl)-1-indanone (5c)

12g (47.4 mmol) of 7-bromo-2,5,6-trimethyl-1-indanone (5b), 10.5 g (59 mmol) of 4-tert-butylphenylboronic acid, 12 g (113 mmol) of sodium carbonate, 111 ml of ethylene glycol and 19 ml of water were placed in a reaction vessel under a protective gas atmosphere and heated to 80°C_{:} While stirring vigorously, a freshly prepared catalyst solution of 30 mg (0.13 mmol) of palladium acetate and 0.2 g (0.3 mmol) of an aqueous TPPTS solution (0.6 molar) in 19 ml of water were added to the reaction components and the reaction mixture was refluxed for 4 hours until the reaction was complete. After cooling to room temperature, the ethylene glycol phase was extracted three times with a total of 900 ml of toluene. The combined toluene phases were washed twice with a total of 250 ml of sodium chloride solution and dried over 150 g of sodium sulfate. Removal of the solvent, drying of the residue and subsequent distillation in an oil pump vacuum gave 15.25 g of yellow oil. This oil was determined by GC-MS to contain 77% of the desired compound and it was used for the next reaction without further purification.
¹H-NMR (400 MHz, CDCl₃): 1.23 (3H, d, 7.2Hz, Me), 1.38 (9H, s, t-Bu), 2.12 (3H, s, Me), 2.37 (3H, s, Me), 2.34-2.40 (1 H, m), 2.58-2.63 (1 H, m), 2.99-3.06 (1 H, m), 7.12 (2H, 8.3Hz, Ph), 7.46 (2H, 8.3Hz, Ph) 7.56 (1 H, s)

### 5d Preparation of 2,5,6-trimethyl-7-(4'-tert-butylphenyl)indene (5d)

2.7 g (71 mmol) of sodium borohydride and 15.2 g (purity 77%, 38 mmol) of 2,5,6-tirmethyl-7-(4'-tert-butylphenyl)-1-indanone (5c) together with 51 ml of toluene were placed in a reaction vessel. At 50°C, 9.5 ml of methanol were slowly added and the reaction mixture was stirred at 50°C for 3 hours. After cooling to room temperature, 35 ml of 2 N sulfuric acid were added and the mixture was stirred for 30 minutes. After phase separation, the organic phase was washed twice with a total of 60 ml of 2 N sulfuric acid, most of the solvent was removed and the residue was taken up in 200 ml of toluene and admixed with 0.1 g of p-toluenesulfonic acid. Water was distilled off from this reaction mixture by refluxing for 1.5 hours on a water separator until the reaction was complete. The reaction mixture was washed once with 100 ml of saturated sodium hydrogencarbonate solution and dried over magnesium sulfate. After removal of the solvent, the residue was dried in an oil pump vacuum. This gave 14.45 g of yellow oil with partially white crystalline. The resulted product was suspended in heptane and filtered to separate 4.4 g of white crystalline, which was determined by GC-MS to be the desired compound (5d). The filtrate was purified by column chromatography ((SiO₂, 20% CH₂Cl₂/heptane) to get 5.0 g of the white crystalline, which was also the desired compound (5d) by GC-MS. Total yield: 11.0 g (82%)
¹H-NMR (400 MHz, CDCl₃): 1.38 (9H,s, t-Bu), 2.01 (3H, s, Me), 2.04 (3H,s, Me), 2.31 (3H, s, Me), 2.97 (2H, allyl), 6.41 (1 H, s), 7.03 (1 H, s), 7.15 (2H, d, Ph), 7.44 (2H, d, Ph) ¹³C-NMR (125 MHz, CD₂Cl₂) 149.8, 146.0, 143.3, 140.6, 138.4, 138.0, 135.3, 129.7, 129.2, 127.1, 125.5, 120.6, 43.1, 34.8 (t-Bu), 31.6 (t-Bu), 21.1 (Me), 16.8 (Me), 16.7 (Me)

### 5e Preparation of dimethylsilanediyl-(2,5,6-trimethyl-4-(4'-tert-butylphenyl)-1-indene) (2-isopropyl-4-(4'-tert-butylphenyl)-1-indene)- (5e)

4.3 g (14.8 mmol) of 2,5,6-trimethyl-4-(4'-tert-butylphenyl)indene (5d) together with 100 ml of toluene and 5 ml of THF were placed in a reaction vessel and 7.1 ml of n-butyllithium solution (2.5 M in toluene) were added quickly at room temperature. After the addition was complete, the mixture was heated to 80°C and stirred at this temperature for 1 hour. After cooling to room temperature, the reaction mixture was added to a solution of 7.0 g (18.3 mmol) of 2-isopropyl-7-(4'-tert-butyl-phenyl)-1-indenyldimethylchlorosilane (prepared by a method analogous to that of WO 01/48034, example 5, page 58) over a period of 1 hour and the resulting mixture was stirred overnight at room temperature. 60 ml of water were added, the phases were separated, the organic phase was washed with 100 ml of water and the combined aqueous phases were extracted twice with a total of 100 ml of toluene. The combined organic phases were dried over magnesium sulfate. After removal of the solvent, the residue was dried in an oil pump vacuum and 12 g of yellow oil was isolated. The reaction mixture was purified by column chromatography (SiO₂, Heptane/CH₂Cl₂=9/1) to get 7.23 g of the desired compound as isomer mixtures(5e).
¹H-NMR (400 MHz, CDCl₃): -0.20, -0.25, -0.26 (6H, Si-Me₂), 1.09-1.14 (3H, i-Pr), 1.27-1.29 (3H, i-Pr), 1.39, 1.40 (18H, t-Bu), 2.07-2.18 (6H, Me), 2.32, 2.33 (3H, Me), 2.69-2.79 (1 H, i-Pr), 3.68, 3.93, 4.02 (2H), 6.27, 6.29 (1 H), 6.84, 6.86 (1 H), 7.11-7.51 (12H)

### 5 Preparation of dimethylsilanediyl-(2,5,6-trimethyl-4-(4'-tert-butylphenyl)-1-indenyl)(2-isopropyl-4-(4'-tert-butylphenyl)-1-indenyl)zirconium dichloride (5)

3.8 g (5.9 mmol) of (5e) together with 100 ml of diethyl ether were placed in a reaction vessel and admixed at room temperature with 4.7 ml (11.8 mmol) of n-butyllithium solution (2.5 M in toluene). After the addition was complete, the mixture was stirred overnight at room temperature. The reaction mixture was cooled to 0°C and 1.4 g (5.9 mmol) of zirconium tetrachloride were added a little at a time. The reaction mixture was stirred at room temperature for 2 hours. The orange precipitate which had been formed was then separated off on a G3 frit and washed twice with 10 ml each time of Et₂O. The orange residue on the frit was dried in an oil pump vacuum to give 4.3 g of pseudo-rac/pseudo-meso complex (1). Recrystallization from toluene gave 0.9 g of the pseudo-rac compound (1).
¹H-NMR (400 MHz, CDCl₃): 1.07 (3H, d, 6.7 Hz, i-Pr), 1.11 (3H, d, 7.2 Hz, i-Pr), 1.31 (3H, s, Si-Me), 1.32 (3H, s, Si-Me), 1.35 (18H, s, t-Bu), 2.14 (3H, s, Me), 2.23 (3H, s, Me), 2.32 (3H, s, Me), 3.37 (1 H, septet, i-Pr), 6.44 (1 H, s), 7.00 (1 H, s), 7.04-7.08 (2H), 7.35 (1H, d, 6.8 Hz), 7.36 (1 H, s), 7.37-7.39 (1 H, m), 7.45-7.48 (3H, m), 7.61 (1 H, d), 7.64-7.65 (3H, m)

The following metallocenes were used in the polymerization experiments:

### Metallocene (MC) No. Structure

- 1: Me₂Si(2,6-Me₂-4-(*p*-^{t}Bu-Ph)-1-Ind) (2-ⁱPr-4-(*p*-^{t}Bu-Ph)-1-Ind) ZrCl₂
- 2: Me₂Si(2-Et-6-Me-4-(*p*-^{t}Bu-Ph)-1-Ind) (2-ⁱPr-4-(*p*-^{t}Bu-Ph)-1-Ind) ZrCl₂
- 3: Me₂Si(2,6-Me₂-4-Ph-1-Ind) (2-ⁱPr-4-(*p*-^{t}Bu-Ph)-1-Ind) ZrCl₂
- 4: Me₂Si(2,6-Me₂-4-(2,5-Me₂Ph)-1-Ind) (2-ⁱPr-4-(*p*-^{t}Bu-Ph)-1-Ind) ZrCl₂
- 5: Me2Si(2,5,6-Me3-4-(*p*-^{t}Bu-Ph)-1-Ind) (2-ⁱPr-4-(*p*-^{t}Bu-Ph)-1-Ind) ZrCl₂
- c 1: Me₂Si(2-ⁱPr-4-(*p*-^{t}Bu-Ph)-1-Ind)(2-Me-4-(*p*-^{t}Bu-Ph)-1-Ind)ZrCl₂

### Homopolymerizations and polymer analysis

| Example | MC No. | Amount | Propylene | H₂ | Activity | m.p | IV | M_{w} | Q |
|---|---|---|---|---|---|---|---|---|---|
| P1 | 1 | 730 mg | 3.5 kg | no | 1.2 | 155.4 | 3.00 | 458 | 2.4 |
| P 2 | 1 | 650 mg | 3.5 kg | yes | 2.9 | 153.3 | 1.87 | 235 | 2.5 |
| P 3 | 2 | 495 mg | 3.5 kg | no | 0.9 | 154.1 | 2.97 | 380 | 2.5 |
| P 4 | 2 | 396 mg | 3.5 kg | yes | 2.9 | 156.3 | 1.88 | 251 | 2.2 |
| P5 | 3 | 593 mg | 3.5 kg | no | 1.0 | 153.3 | 3.34 | 493 | 2.6 |
| P 6 | 3 | 401 mg | 3.5 kg | yes | 4.0 | 155.0 | 1.66 | 250 | 2.5 |
| P 7 | 4 | 589 mg | 3.5 kg | no | 1.0 | 153.9 | 3.64 | 635 | 2.7 |
| P 8 | 4 | 411 mg | 3.5 kg | yes | 4.0 | 153.4 | 2.18 | 287 | 2.4 |
| P 9 | 5 | 601 mg | 5.5 kg | no | 1.7 | 155.8 | 4.30 | | 3.7 |
| cP 1 | c1 | 570 mg | 3.5 kg | no | 0.6 | 152.5 | 2.53 | 356 | 2.3 |

Units and abbreviations: activity: kg/(g*h); melting point (m.p.): °C; viscosity number (IV): dl/g; weight average molar mass (M_{w}): 10³ g/mol; polydispersity: Q=M_{w}/Mₙ

### Microstructure determined by ¹³C-NMR spectroscopy

| Example | mmmm | mrrm | E | H |
|---|---|---|---|---|
| P1 | 97.20 | 0.19 | 0.30 | 0.07 |
| P 2 | 97.27 | 0.20 | 0.25 | 0.10 |
| P 4 | 97.40 | 0.21 | 0.20 | 0.11 |
| cP 1 | 96.80 | 0.22 | 0.35 | 0.07 |

All units in %; abbreviations: E: erythro 2,1 reverse insertions; H: 3,1 reverse insertions; mrrm: stereo defects; mmmm: mmmm pentads calculated from 100-5*mrrm-5*E-5*H

### Copolymerizations and polymer analysis:

| Example | MC No. | Amount | Activity | IV | M_{w} | Q | m.p. | C2 content |
|---|---|---|---|---|---|---|---|---|
| P10 | 1 | 207 mg | 5.4 | 3.71 | 608 | 2.70 | 122.8 | 3.4 |
| P11 | 2 | 226 mg | 3.5 | 3.73 | 671 | 2.94 | 128.7 | 2.8 |
| P12 | 3 | 208 mg | 8.3 | 3.80 | 610 | 2.70 | 114.6 | 5.4 |
| P 13 | 4 | 202 mg | 6.1 | 3.53 | 533 | 2.46 | 127.1 | 3.2 |
| P 14 | 5 | 202 mg | 11.5 | 4.80 | 815 | 3.6 | 122.7 | 4.4 |
| cP 2 | C1 | 209 mg | 3.4 | 2.86 | 433 | 2.34 | 125.8 | 3.2 |

Units and abbreviations: activity: kg/(g*h); melting point (m.p.): °C; viscosity number (IV): dl/g; weight average molar mass (M_{w}): 10^3 g/mol; polydispersity: Q=M_{w}/Mₙ; C2 content: % by weight

## Claims

1. An organometallic transition metal compound of the formula (I) 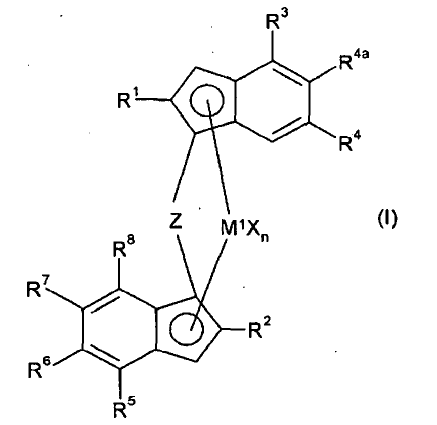 in which
M¹ is an element of group 4 of the Periodic Table of the Elements,
X are identical or different and are each halogen, hydrogen, C₁₋C₂₀-alkyl, C₂-C₂₀-alkenyl, C₆-C₂₂-aryl, an alkylaryl or arylalkyl group having from 1 to 10 carbon atoms in the alkyl part and from 6 to 22 carbon atoms in the aryl part, -OR⁹ or -NR⁹R¹⁰, with two radicals X also being able to be joined to one another, wherein the radicals R⁹ and R¹⁰ are each C₁-C₁₀-alkyl, C₆-C₁₅-aryl, alkylaryl, arylalkyl, fluoroalkyl or fluoroaryl each having from 1 to 20 carbon atoms in the alkyl radical and 6 to 22 carbon atoms in the aryl radical,
n is 2,
Z is 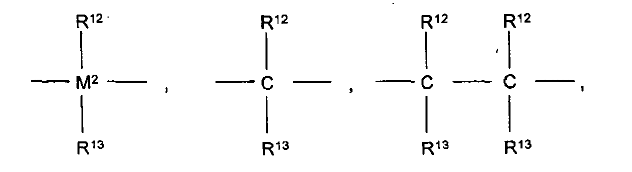 where
M² is silicon and
R¹² , R¹³ are identical or different and are each a hydrogen atom, a halogen atom, a trimethylsilyl group, a C₁-C₁₀-alkyl group, a C₁-C₁₀-fluoroalkyl group, a C₆-. C₁₀-fluoroaryl group, a C₆-C₁₀-aryl group, a C₁-C₁₀-alkoxy group, a C₇-C₁₅-alkylaryloxy group, a C₂-C₁₀-alkenyl group, a C₇-C₄₀-arylalkyl group, a C₈-C₄₀-arylalkenyl group or a C₇C₄₀-alkylaryl group or two adjacent radicals together with the atoms connecting them form a saturated or unsaturated ring having from 4 to 15 carbon atoms,
R¹ is a C₁-C₈₋ₙ-alkyl radical,
R² is a C₃-C₁₀-alkyl or -cycloalkyl radical which is branched in the α position,
R³ is phenyl, 2-tolyl, 3-tolyl, 4-tolyl, 2,3-dimethylphenyl, 2,4-dimethylphenyl, 2,5-dimethylphenyl, 2,6-dimethylphenyl, 3,4-dimethylphenyl, 3,5-dimethylphenyl, 3,5-di(tert-butyl)phenyl, 2,4,6-trimethylphenyl, 2,3,4-trimethylphenyl, 1-naphthyl, 2-naphthyl, phenanthrenyl, p-isopropylphenyl, p-tert-butylphenyl, p-s-butylphenyl, p-cyclohexylphenyl or p-trimethylsilylphenyl,
R⁴ is methyl or ethyl,
R^{4a} is hydrogen or C₁-C₁₀-n-alkyl,
R⁵ is phenyl, 2-tolyl, 3-tolyl, 4-tolyl, 2,3-dimethylphenyl, 2,4-dimethylphenyl, 2,5-dimethylphenyl, 2,6-dimethylphenyl, 3,4-dimethylphenyl, 3,5-dimethylphenyl, 3,5-di(tert-butyl)phenyl, 2,4,6-trimethylphenyl, 2,3,4-trimethylphenyl, 1-naphthyl, 2-naphthyl, phenanthrenyl, p-isopropylphenyl, p-tert-butylphenyl, p-s-butylphenyl, p-cyclohexylphenyl or p-trimethylsilylphenyl,
R⁶, R⁷ and R⁸ are each hydrogen,

2. A biscyclopentadienyl ligand system of the formula (II) 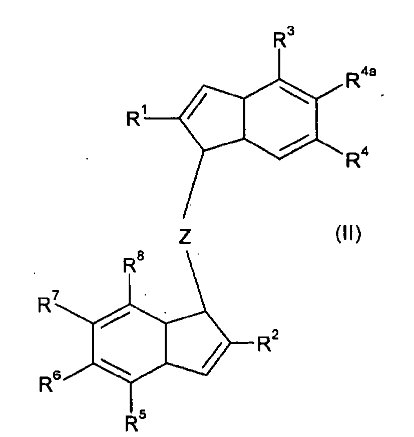 or a double bond isomer thereof,
where the variables R¹, R², R³, R⁴, R^{4a}, R⁶, R⁶,R⁷, R⁸ and Z are as defined for formula (I).

3. A catalyst system comprising at least one organometallic transition metal compound as claimed in claim 1 and at least one cocatalyst.

4. A catalyst system as claimed in claim 3 which further comprises a support.

5. A process for preparing polyolefins by polymerization or copolymerization of at least one olefin in the presence of a catalyst system as claimed in claim 3 or 4.

6. A process for preparing polypropylene/propylene-ethylene copolymer mixtures in the presence of a catalyst system as claimed in claim 3 or 4.

7. The use of a biscyclopentadienyl ligand system as claimed in claim 2 for preparing an organometallic transition metal compound.

8. A process for preparing an organometallic transition metal compound, which comprises reacting a biscyclopentadienyl ligand system as claimed in claim 2 or a bisanion prepared therefrom with a transition metal compound.

## Patentansprüche

1. Organoübergangsmetallverbindung der Formel (I) 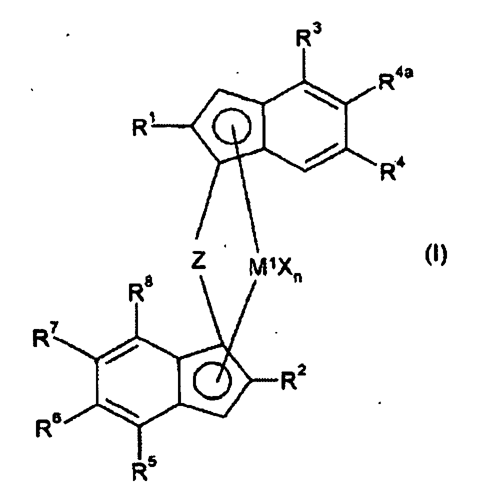 worin
M¹ ein Element der vierten Gruppe des Periodensystems der Elemente ist,
X gleich oder verschieden ist und jeweils Halogen, Wasserstoff, C₁-C₂₀-Alkyl, C₂-C₂₀-Alkenyl, C₆-C₂₂-Aryl, eine Alkylaryl- oder Arylalkylgruppe mit 1 bis 10 Kohlenstoffatomen im Alkylteil und 6 bis 22 Kohlenstoffatomen im Arylteil, -OR⁹ oder -NR⁹R¹⁰ ist, wobei zwei Reste X auch miteinander verknüpft sein können, wobei die Reste R⁹ und R¹⁰ jeweils C₁-C₁₀-Alkyl, C₆-C₁₅-Aryl, Alkylaryl, Arylalkyl, Fluoralkyl oder Fluoraryl mit je 1 bis 20 Kohlenstoffatomen im Alkylrest und 6 bis 22 Kohlenstoffatomen im Arylrest sind,
gleich 2 ist,
Z 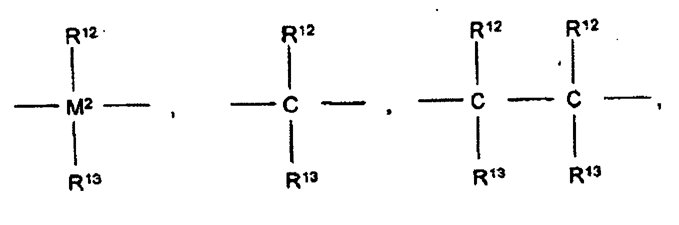 ist,
wobei
M² Silicium ist und
R¹², R¹³ gleich oder verschieden sind und jeweils ein Wasserstoffatom, ein Halogenatom, eine Trimethylsilylgruppe, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₇-C₁₅-Alkylaryloxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe sind oder zwei benachbarte Reste zusammen mit den sie verbindenden Atomen einen gesättigten oder ungesättigten Ring mit 4 bis 15 Kohlenstoffatomen bilden,
R¹ ein C₁-C₈-Alkylrest ist,
R² ein C₃-C₁₀-Alkyl- oder -Cycloalkylrest mit Verzweigung in α-Stellung ist,
R³ Phenyl, 2-Tolyl, 3-Tolyl, 4-Tolyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 3,5-Di(tert.-butyl)phenyl, 2,4,6-Trimethylphenyl, 2,3,4-Trimethylphenyl, 1-Naphthyl, 2-Naphthyl, Phenanthrenyl, p-Isopropylphenyl, p-tert.-Butylphenyl, p-s-Butylphenyl, p-Cyclohexylphenyl oder p-Trimethylsilylphenyl ist,
R⁴ Methyl oder Ethyl ist,
R^{4a} Wasserstoff oder C₁-C₁₀-n-Alkyl ist,
R⁵ Phenyl, 2-Tolyl, 3-Tolyl, 4-Tolyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 3,5-Di(tert.-butyl)phenyl, 2,4,6-Trimethylphenyl, 2,3,4-Trimethylphenyl, 1-Naphthyl, 2-Naphthyl, Phenanthrenyl, p-Isopropylphenyl, p-tert.-Butylphenyl, p-s-Butylphenyl, p-Cyclohexylphenyl oder p-Trimethylsilylphenyl ist,
R⁶, R⁷ und R⁸ jeweils Wasserstoff sind.

2. Biscyclopentadienylligandsystem der Formel (II) 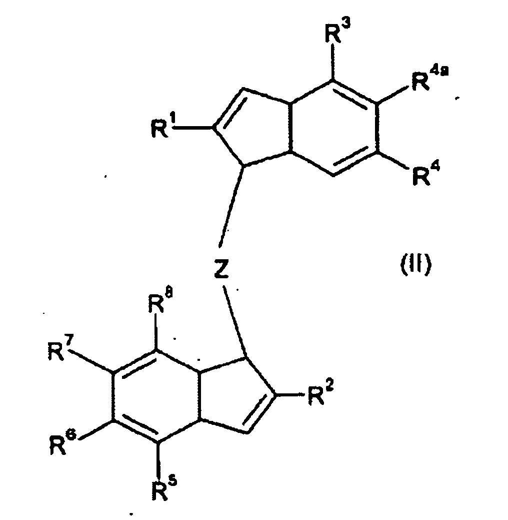 oder seine Doppelbindungsisomere,
wobei die Variablen R¹, R², R³, R⁴, R^{4a}, R⁵, R⁶, R⁷, R⁸ und Z die zur Formel (I) genannte Bedeutung haben.

3. Katalysatorsystem, umfassend mindestens eine Organoübergangsmetallverbindung gemäß Anspruch 1 und mindestens einen Cokatalysator.

4. Katalysatorsystem nach Anspruch 3, welches ferner einen Träger umfaßt.

5. Verfahren zur Herstellung von Polyolefinen durch Polymerisation oder Copolymerisation mindestens eines Olefins in Gegenwart eines Katalysatorsystems gemäß Anspruch 3 oder 4.

6. Verfahren zur Herstellung von Polypropylen/Propylen-Ethylen-Copolymer-Mischungen in Gegenwart eines Katalysatorsystems gemäß Anspruch 3 oder 4.

7. Verwendung eines Biscyclopentadienylligandsystems gemäß Anspruch 2 zur Herstellung einer Organoübergangsmetallverbindung.

8. Verfahren zur Herstellung einer Organoübergangsmetallverbindung, umfassend die Umsetzung eines Biscyclopentadienylligandsystems gemäß Anspruch 2 oder eines daraus hergestellten Bisanions mit einer Übergangsmetallverbindung.

## Revendications

1. Composé organométallique à métal de transition de formule (I) 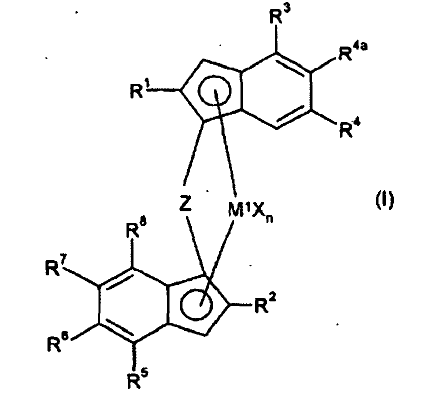 dans laquelle
M¹ est un élément du groupe 4 du Tableau Périodique des Eléments,
X sont identiques ou différents et sont chacun un atome d'halogène, un atome d'hydrogène, un groupe alkyle en C₁-C₂₀, un groupe alcényle en C₂-C₂₀, un groupe aryle en C₆-C₂₂, un groupe alkylaryle ou un groupe arylalkyle renfermant de 1 à 10 atomes de carbone dans la partie alkyle et de 6 à 22 atomes de carbone dans la partie aryle, un groupe -OR⁹ ou un groupe -NR⁹R¹⁰, deux radicaux X pouvant également être joints l'un à l'autre, où les radicaux R⁹ et R¹⁰ sont chacun un groupe alkyle en C₁-C₁₀, un groupe aryle en C₆-C₁₅, un groupe alkylaryle, un groupe arylalkyle, un groupe fluoroalkyle ou un groupe fluoroaryle, chacun renfermant de 1 à 20 atomes de carbone dans le radical alkyle et de 6 à 22 atomes de carbone dans le radical aryle,
n vaut 2,
Z est 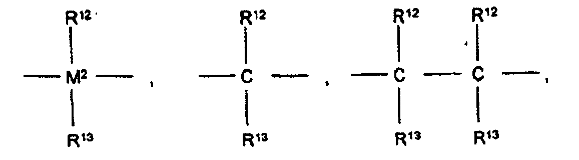 où
M² est un atome de silicium, et
R¹² et R¹³ sont identiques ou différents et sont chacun un atome d'hydrogène, un atome d'halogène, un groupe triméthylsilyle, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alkylaryloxy en C₇-C₁₅, un groupe alcényle en C₂-C₁₀, un groupe arylalkyle en C₇-C₄₀, un groupe arylalcényle en C₈-C₄₀ ou un groupe alkylaryle en C₇-C₄₀, ou deux radicaux adjacents, conjointement avec les atomes les reliant, forment un noyau saturé ou insaturé renfermant de 4 à 15 atomes de carbone,
R¹ est un radical n-alkyle en C₁-C₈,
R² est un radical alkyle ou cycloalkyle en C₃-C₁₀, qui est ramifié en position α,
R³ est un groupe phényle, un groupe 2-tolyle, un groupe 3-tolyle, un groupe 4-tolyle, un groupe 2,3-diméthylphényle, un groupe 2,4-diméthylphényle, un groupe 2,5-diméthylphényle, un groupe 2,6-diméthylphényle, un groupe 3,4-diméthylphényle, un groupe 3,5-diméthylphényle, un groupe 3,5-di(tert-butyl)phényle, un groupe 2,4,6-triméthylphényle, un groupe 2,3,4-triméthylphényle, un groupe 1-naphtyle, un groupe 2-naphtyle, un groupe phénanthrényle, un groupe p-isopropylphényle, un groupe p-tert-butylphényle, un groupe p-s-butylphényle, un groupe p-cyclohexylphényle ou un groupe p-triméthylsilylphényle,
R⁴ est un groupe méthyle ou un groupe éthyle,
R^{4a} est un atome d'hydrogène ou un groupe n-alkyle en C₁-C₁₀,
R⁵ est un groupe phényle, un groupe 2-tolyle, un groupe 3-tolyle, un groupe 4-tolyle, un groupe 2,3-diméthylphényle, un groupe 2,4-diméthylphényle, un groupe 2,5-diméthylphényle, un groupe 2,6-diméthylphényle, un groupe 3,4-diméthylphényle, un groupe 3,5-diméthylphényle, un groupe 3,5-di(tert-butyl)phényle, un groupe 2,4,6-triméthylphényle, un groupe 2,3,4-triméthylphényle, un groupe 1-naphtyle, un groupe 2-naphtyle, un groupe phénanthrényle, un groupe p-isopropylphényle, un groupe p-tert-butylphényle, un groupe p-s-butylphényle, un groupe p-cyclohexylphényle ou un groupe p-triméthylsilylphényle,
R⁶, R⁷ et R⁸ sont chacun un atome d'hydrogène.

2. Système de ligand biscyclopentadiényle de formule (II) 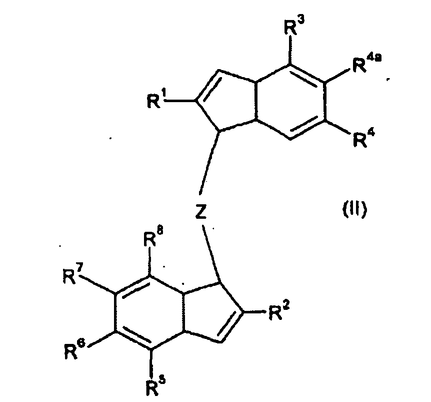 ou un isomère de double liaison de celui-ci,
dans laquelle les variables R¹, R², R³, R⁴, R^{4a}, R⁵, R⁶, R⁷, R⁸ et Z sont telles que définies pour la formule (I).

3. Système catalytique comprenant au moins un composé organométallique à métal de transition selon la revendication 1 et au moins un co-catalyseur.

4. Système catalytique selon la revendication 3, qui comprend en outre un support.

5. Procédé de préparation de polyoléfines par la polymérisation ou la copolymérisation d'au moins une oléfine en présence d'un système catalytique selon la revendication 3 ou 4.

6. Procédé de préparation de mélanges de copolymères polypropylène/propylène-éthylène en présence d'un système catalytique selon la revendication 3 ou 4.

7. Utilisation d'un système de ligand biscyclopentadiényle selon la revendication 2 pour la préparation d'un composé organométallique à métal de transition.

8. Procédé de préparation d'un composé organométallique à métal de transition, qui comprend la réaction d'un système de ligand biscyclopentadiényle selon la revendication 2 ou un bis-anion préparé à partir de celui-ci avec un composé à métal de transition.
